# FASCICULE DE BREVET EUROPEEN

(11) **EP 2 952 431 B1**
(45) Date de publication et mention de la délivrance du brevet: **27.07.2016**
(21) Numéro de dépôt: 15168476.8
(22) Date de dépôt: 20.05.2015
(51) Int. Cl.: B64C 27/56, B64C 13/10, B64C 13/46

(54) **DISPOSITIF D ALERTE D'UN PILOTE DE GIRAVION PAR SIGNAUX TACTILES, METTANT EN OEUVRE UN « VÉRIN DE TRIM » RELIÉ À UN ORGANE DE COMMANDE DE VOL**
WARNANLAGE EINES PILOTEN EINES DREHFLÜGELFLUGZEUGS DURCH TAKTILE SIGNALE, BEI DER EIN MIT EINEM FLUGSTEUERORGAN VERBUNDENER TRIM-ZYLINDER ZUM EINSATZ KOMMT
A DEVICE FOR WARNING A ROTORCRAFT PILOT BY MEANS OF TACTILE SIGNALS AND MAKING USE OF A TRIM ACTUATOR CONNECTED TO A FLIGHT CONTROL MEMBER

(30) Priorité: 28.05.2014 FR 1401235
(43) Date de publication de la demande: 09.12.2015
(73) Titulaire: Airbus Helicopters, 13725 Marignane Cedex (FR)
(72) Inventeur: Sandri, Florence, 13650 Meyrargues (FR)
(74) Mandataire: Pouillot, Laurent Pierre Paul

(56) Documents cités:
- EP-A2- 2 631 172
- US-A1- 2005 004 721
- US-A1- 2006 071 817
- US-A1- 2010 123 045
- US-B2- 7 098 811
- US-B2- 7 262 712

## Description

La présente invention est du domaine des systèmes de commande de vol équipant les giravions pour modifier le pas des pales d'un rotor principal procurant au moins la sustentation du giravion. La présente invention relève plus particulièrement de tels systèmes de commande de vol comportant un dispositif d'alerte par signaux tactiles avertissant un pilote du giravion d'un excès de requête en puissance mécanique à fournir par un groupe de motorisation équipant le giravion pour au moins entraîner le rotor principal.

On rappelle que les giravions sont des aéronefs à voilure(s) tournante(s) dont au moins la sustentation est procurée par au moins un rotor principal à axe d'entraînement sensiblement vertical. Dans le cadre spécifique d'un hélicoptère, le rotor principal procure non seulement la sustentation du giravion, mais aussi sa propulsion suivant des directions quelconques d'avancement.

Les giravions sont aussi couramment équipés d'un dispositif anticouple procurant leur guidage en lacet, tel qu'au moins un rotor annexe à axe d'entraînement sensiblement horizontal. Un tel rotor annexe est par exemple un rotor arrière ou peut être formé d'une hélice propulsive dans le cadre d'un hélicoptère à vitesse élevée de propulsion en translation.

Le ou les rotors équipant le giravion sont entraînés en rotation par un groupe de motorisation. Le comportement en vol du giravion peut être modifié par un pilote du giravion opérant une variation cyclique et/ou collective du pas des pales composant la voilure tournante du ou des rotors. Plus particulièrement, les pales sont manoeuvrables par le pilote autour d'un axe individuel de variation de pas s'étendant suivant leur direction principale d'extension.

Le pilote du giravion est potentiellement un pilote humain générant des commandes manuelles de vol et/ou un pilote automatique générant des commandes automatisées de vol.

En ce qui concerne plus particulièrement le rotor principal, une variation du pas cyclique des pales induit une modification du comportement du giravion en assiette, et plus particulièrement sélectivement en tangage et/ou en roulis. Une variation du pas collectif des pales induit une modification de l'effort de portance du giravion fourni par le rotor principal et/ou permet de guider le giravion suivant l'axe de gravité.

Pour générer les commandes manuelles de vol provoquant une variation du pas des pales du rotor principal, le pilote humain exploite des chaînes principales de commande qu'il manoeuvre en entraînant manuellement (par opposition à un entraînement automatisé) des organes de commande de vol. Les pales sont manoeuvrables en pivotement par les chaînes principales de commande autour d'un axe individuel de variation de pas, par l'intermédiaire d'un mécanisme à double plateau monté mobile axialement et en rotule sur un mât porteur du rotor. Le double plateau comprend un plateau supérieur relié aux pales par l'intermédiaire de bielles de variation de leur pas et monté tournant sur un plateau inférieur relié aux chaines principales de commande.

Classiquement pour faire varier le pas collectif des pales du rotor principal, l'organe de commande de vol est typiquement agencé en levier de pas d'actionnement d'une première chaîne principale de commande provoquant un déplacement axial du double plateau. Pour faire varier le pas cyclique des pales du rotor principal, l'organe de commande de vol est typiquement agencé en manette d'actionnement d'une deuxième chaîne principale de commande provoquant une inclinaison du double plateau.

En général, les chaînes principales de commande mettent en oeuvre des servocommandes hydrauliques manoeuvrant les pales du rotor principal autour de leur axe de variation de pas à partir des commandes de vol générées par le pilote humain au moyen des organes de commande de vol. L'exploitation de telles servocommandes permet au pilote de manoeuvrer en pivotement les pales du rotor principal autour de leurs axes de variation de pas respectifs avec précision et sans effort majeur.

On relèvera cependant que malgré l'assistance procurée par les servocommandes pour manoeuvrer les pales, le pilote humain doit fournir des efforts d'entraînement de l'organe de commande de vol suffisants pour surmonter d'éventuelles frictions plus ou moins majeures persistant entre les différents organes composant la chaîne principale de commande à transmission mécanique.

Selon d'autres modes de réalisation, la chaîne principale de commande peut également comporter une transmission d'une part partiellement mécanique et d'autre part partiellement optique ou électrique.

Dans ce cas, les déplacements de l'organe de commande de vol peuvent être détectés par un capteur optique ou électrique générant un signal représentatif de la position courante de l'organe de commande. Un tel signal est alors transmis à un calculateur apte à générer des signaux de commande des servocommandes hydrauliques manoeuvrant les pales du rotor principal autour de leur axe de variation de pas.

Un tel organe de commande de vol peut alors se présenter avantageusement sous la forme d'un palonnier, d'un manche ou d'un levier conventionnel à grand débattement, c'est-à-dire par exemple qu'une extrémité libre de l'organe de commande possède une amplitude de débattement importante de plusieurs dizaine de centimètres.

Par ailleurs, et selon un autre exemple de réalisation, l'organe de commande peut aussi se présenter sous la forme d'un mini manche également désigné par le terme de "joystick" en langue anglaise. Un tel mini manche présente alors un petit débattement. Plus précisément l'extrémité libre de ce mini manche possède une amplitude de débattement limitée à quelques centimètres.

Pour générer les commandes automatisées de vol, le giravion est équipé de chaînes annexes de commande mettant en oeuvre le pilote automatique, une chaîne de commande annexe étant affectée à chacun des axes d'avancement du giravion.

Selon un agencement simplifié des dites chaînes de commande annexes, le pilote automatique est exploité selon au moins des modes de fonctionnement, communément désignés par « modes de base », procurant une assistance à la stabilisation de l'avancement du giravion respectivement au moins en tangage, en roulis et en lacet. Selon un agencement perfectionné des dites chaînes de commande annexes, le pilote automatique est exploité selon des modes de fonctionnement, communément désignés par « modes supérieurs », procurant respectivement un guidage du giravion suivant ses différents axes d'avancement en tangage, en roulis, en lacet et suivant l'axe de gravité.

Selon l'équipement du giravion, le pilote automatique est susceptible de procurer au moins ledit mode fonctionnel de base et/ou le mode supérieur.

Pour provoquer une variation du pas des pales du rotor principal, le pilote automatique génère des ordres d'activation d'actionneurs en prise sur une chaîne principale de commande donnée. De tels actionneurs comprennent couramment des vérins, dont un vérin communément dénommé « vérin de trim » et un vérin communément dénommé « vérin série ».

Pour une chaîne principale de commande donnée, le « vérin de trim » est typiquement relié avec l'organe de commande de vol en parallèle à la chaîne principale de commande. Le « vérin de trim » est dédié à la manoeuvre de la chaîne principale de commande suivant des déplacements pouvant être conséquents.

Selon une forme courante de réalisation, le « vérin de trim » est couramment exploité pour transmettre une sensation d'efforts au pilote en réponse aux manoeuvres en pivotement des pales que le pilote opère par l'intermédiaire de l'organe de commande de vol. A cet effet, le « vérin de trim » intègre un système à retour d'efforts générateur d'un effort résistant à l'encontre d'un entraînement par l'homme de l'organe de commande de vol, selon la position courante en pivotement des pales autour de leur axe de variation de pas.

Le système à retour d'efforts met couramment en oeuvre au moins un moteur du « vérin de trim », voire encore un mécanisme à embrayage et accessoirement des moyens à déformation élastique tels qu'agencés en ressort. Lorsqu'il est activé, le système à retour d'efforts provoque un ancrage du « vérin de trim » sur la chaîne principale de commande permettant alors au « vérin de trim » de générer ledit effort résistant à l'encontre de l'entraînement par l'homme de l'organe de commande de vol.

L'ancrage du « vérin de trim » sur la chaîne principale de commande est notamment opéré par l'intermédiaire d'un mécanisme d'embrayage provoquant sélectivement soit un ancrage du « vérin de trim » sur la chaîne principale de commande en position embrayée soit une libération de la chaîne principale de commande de l'emprise exercée par le « vérin de trim » en position débrayée.

Le pilote humain dispose couramment d'une fonction d'inhibition de la mise en oeuvre du système à retour d'efforts, connue sous la dénomination « trim release », pour rompre l'ancrage du « vérin de trim » sur la chaîne principale de commande.

L'ancrage du « vérin de trim » sur la chaîne principale de commande est notamment réalisé par activation du moteur et/ou le cas échéant par l'intermédiaire du mécanisme à embrayage. Lorsque le « vérin de trim » est en situation d'ancrage, une mise en rotation du moteur placée sous la dépendance d'une identification des commandes de vol opérées par le pilote humain par l'intermédiaire de l'organe de commande de vol permet de faire varier ledit effort résistant, soit directement soit le cas échéant par l'intermédiaire des moyens à déformation élastique.

Dans ces conditions, il est à distinguer différents types de « vérin de trim » communément classifiés selon leur structure et leurs modalités de fonctionnement propres visant notamment à générer ledit effort résistant.

On relèvera notamment entre autres les différents types de « vérins de trim » connus suivants :
-) Les « vérins de trim » de type passifs motorisés à friction procurant un effort résistant constant indépendant de la position de l'organe de commande de vol.
-) Les « vérins de trim » motorisés à ancrage procurant un effort résistant variable à l'encontre d'une manoeuvre de la chaîne principale de commande par l'organe de commande de vol entraîné par l'homme.

L'effort résistant opposé par un « vérin de trim » motorisé à ancrage varie sous l'effet de l'activation de la motorisation du « vérin de trim ». L'activation de ladite motorisation du « vérin de trim »permet de faire varier le gradient d'effort opposé par le « vérin de trim » à l'encontre d'un entraînement par l'homme de l'organe de commande de vol. Le gradient d'effort opposé par le « vérin de trim » est notamment déterminé selon la position relative entre la position d'ancrage du « vérin de trim » sur la chaîne principale de commande et la position courante de l'organe de commande de vol.

En outre parmi les « vérins de trim » motorisés à ancrage, il est à distinguer les « vérins de trim » motorisés à ancrage de type passif et les « vérins de trim » motorisés à ancrage de type actif selon les modalités mises en oeuvre pour générer ledit effort résistant.

Dans le cas d'un « vérin de trim » motorisé à ancrage de type passif, ledit effort résistant est produit par l'intermédiaire d'un ressort précontraint plus ou moins placé sous tension par activation de la motorisation. La précontrainte du ressort procure un confort de pilotage en compensant les frictions de la chaîne principale de commande.

Dans le cas d'un « vérin de trim » motorisé à ancrage de type actif, ledit effort résistant est directement produit par la motorisation du « vérin de trim » qui oppose un couple résistant à l'encontre d'une manoeuvre de la chaîne principale de commande. La motorisation du « vérin de trim » permet en outre de procurer ledit confort de pilotage en compensant les frictions de la chaîne principale de commande par génération d'un couple résistant de valeur donnée.

Le « vérin série » est typiquement placé en série sur la chaîne principale de commande, en étant dédié à la manoeuvre de la chaîne principale de commande suivant des déplacements plus modestes et plus rapides que ceux provoqués par le « vérin de trim ».

Par ailleurs, le groupe de motorisation du giravion comprend un ou plusieurs moteurs à combustion, turbomoteurs notamment. Le régime courant de fonctionnement du groupe de motorisation est placé sous la dépendance d'une unité de régulation selon différents régimes de régulation identifiés en fonction d'un régime nominal de régulation communément désigné par régime AEO (d'après l'acronyme anglais All Engine Opérative).

La régulation du régime de fonctionnement du groupe de motorisation permet d'éviter une détérioration du ou des moteurs sous l'effet d'une exploitation excessive des capacités du groupe de motorisation à fournir la puissance mécanique requise par le giravion. Plusieurs critères de limitation sont pris en compte par l'unité de régulation pour éviter une telle exploitation excessive.

Parmi de tels critères de limitation, on relèvera notamment :
-) un critère de limitation de la température des gaz en sortie de la turbine haute pression du ou des turbomoteurs,
-) un critère de limitation de la vitesse du générateur de gaz et/ou de la turbine libre entraînée par les gaz en sortie de la turbine haute pression, et
-) un critère de limitation de couple en entrée d'une boîte principale de transmission de puissance sur laquelle sont en prise le ou les rotors pour leur entraînement.

En outre en régime AEO, différents régimes spécifiques de fonctionnement du groupe de motorisation sont habituellement définis en fonction des phases de vol du giravion.

Parmi ces régimes de régulation spécifiques en régime AEO, on relèvera notamment :
-) un régime PMC (d'après l'acronyme français Puissance Maximum Continue) définissant le régime maximum autorisé en continu du ou des moteurs selon les contraintes imposées par lesdits critères de limitation,
-) un régime PMD (d'après l'acronyme français Puissance Maximum au Décollage) définissant le régime maximum autorisé du ou des moteurs pouvant être exploité pendant une durée prédéterminée définie suffisante pour permettre le décollage du giravion,
-) un régime PMT (d'après l'acronyme français Puissance Maximum Transitoire) définissant le régime maximum autorisé du ou des moteurs pouvant être exploité en phase transitoire de changement de vitesse d'avancement du giravion, notamment en phase d'accélération du giravion.

Dans ces conditions, un cas de panne de l'un des moteurs du groupe de motorisation d'un aéronef motorisé est à prendre en compte dans le domaine de l'aéronautique. Dans un tel cas de panne, le nombre de moteurs disponibles pour fournir au giravion la puissance mécanique nécessaire est réduit.

C'est pourquoi il a été établi des régimes dits OEI (d'après l'acronyme anglais One Engine Inoperative) de régulation du régime des moteurs du groupe de motorisation en cas de panne de l'un d'entre eux. En cas de panne d'un moteur, au moins un autre moteur disponible fonctionnant en régime OEI est apte à fournir la puissance mécanique nécessaire au fonctionnement du giravion pendant une durée prédéfinie pour permettre temporairement au giravion de progresser en vol malgré l'indisponibilité de l'un des moteurs.

Divers régimes OEI sont habituellement établis pour diverses phases de vol du giravion, tels que par exemple les régimes OEI courants suivants :
-) régime OEI-très courte durée, selon lequel le ou les moteurs opérationnels sont individuellement aptes à être exploités à un régime d'urgence pour une durée brève de l'ordre de 30 secondes en phase de décollage du giravion.
-) régime OEI-courte durée, selon lequel le ou les moteurs opérationnels sont individuellement aptes à être exploités à un régime d'urgence pour une durée courte de l'ordre de 2 minutes à 3 minutes en phase de décollage avancé du giravion.
-) régime OEI-longue durée, selon lequel le ou les moteurs opérationnels sont individuellement aptes à être exploités à un régime maximum pour une durée longue, potentiellement illimitée.

L'unité de régulation du fonctionnement du groupe de motorisation, telle que par exemple un FADEC (d'après l'acronyme anglais Full Authority Digital Engine Control), dispose d'une commande de régulation délivrée par une unité de commande équipant le giravion, telle que par exemple un AFCS (d'après l'acronyme anglais Automatic Flight Control System).

Dans ce contexte, il se pose le problème général d'une surveillance par le pilote humain du giravion d'une potentielle exploitation excessive des capacités du groupe de motorisation à fournir la puissance mécanique requise par le giravion.

Il est connu de surveiller les marges de puissance mécanique disponibles du groupe de motorisation par voie d'affichage, à partir des données fournies par un IPL (d'après l'acronyme français Instrument de Première Limitation).

Les marges de valeurs disponibles des différents critères de limitation sont collectées par l'IPL et la marge de valeur la plus contraignante par rapport aux différents régimes de fonctionnement autorisés du groupe de motorisation est prise en considération pour afficher la marge de puissance disponible et/ou par équivalence la marge disponible de variation du pas des pales du rotor principal.

Cependant, il est utile de réduire la charge de travail du pilote humain dont l'attention est essentiellement occupée par la surveillance de l'environnement extérieur du giravion. C'est pourquoi il a été développé des dispositifs d'alerte générant au moins un signal tactile perceptible par le pilote humain par l'intermédiaire d'un organe de commande de vol.

De tels dispositifs d'alerte permettent d'avertir le pilote humain d'une situation potentielle de danger au regard d'une exploitation excessive des capacités du groupe de motorisation à fournir la puissance mécanique requise par le giravion.

Il est opportun de procurer une information variable de l'alerte transmise au pilote par voie tactile selon le degré d'urgence d'intervention du pilote visant à réduire les besoins en puissance mécanique que le groupe de motorisation doit fournir.

Il est aussi opportun d'optimiser raisonnablement la prise en compte des paramètres aptes à révéler une exploitation excessive des capacités du groupe de motorisation à fournir la puissance mécanique requise par le giravion.

Il est aussi à veiller que les modalités de mise en oeuvre de tels dispositifs d'alerte n'induisent pas un risque d'être génératrices de de variations brutales du régime de fonctionnement du groupe de motorisation.

Il a par exemple été proposé par le demandeur dans un document US 2010/123045, ou tels que décrits par les documents US 7 098 811 et EP 2 631 172 (BELL HELICOPTER TEXTRON, Inc.) et US 7 262 712 et US 2006/071817 (SAFE FLIGHT INSTRUMENT, Corp.) ou encore US 2005/004721 (EINTHOVEN PIETER G) d'équiper avec un dispositif d'alerte par signaux tactiles un levier de pas dédié à la commande manuelle d'une variation collective du pas des pales d'un rotor principal d'un giravion, afin de signaler au pilote un état de surcharge du ou des moteurs équipant le giravion.

A cet effet, les valeurs respectives de divers paramètres de vol du giravion sont collectées et sont transmises à une unité de calcul déterminant un état de surcharge courant ou anticipé du ou des moteurs du groupe de motorisation. En cas d'un tel état de surcharge, l'unité de calcul provoque l'activation du dispositif d'alerte selon des modalités variant en fonction du degré d'urgence d'intervention du pilote pour réduire la requête en puissance.

Pour déterminer l'état de surcharge du ou des moteurs, les paramètres de vol du giravion pris en considération sont choisis parmi ceux classiquement révélateurs de l'état du fonctionnement du ou des moteurs tels que les paramètres de vol couramment exploités pour caractériser les critères de limitation précédemment mentionnés dans le cadre de la régulation du ou des moteurs.

Selon le document US 7 098 811, le dispositif d'alerte est composé d'une part d'un vibreur et d'autre part d'une cartouche à ressort montée en prise sur le levier de pas et mise sous contrainte par un moteur électrique dont la mise en oeuvre est placée sous la dépendance de l'unité de calcul.

L'unité de calcul active à un premier seuil d'urgence le moteur électrique de mise sous tension de la cartouche à ressort générant un effort résistant à l'encontre de la manoeuvre du levier de pas par le pilote. A un deuxième seuil d'urgence l'unité de calcul active le vibreur.

Lesdits seuils d'urgence sont déterminés en fonction de la valeur des divers paramètres de vol du giravion fournis par une unité de surveillance du fonctionnement du giravion HUMS (d'après l'acronyme anglais Health And Usage Monitoring Systems).

La cartouche à ressort est tarée à une valeur d'ancrage sous l'effet de sa mise sous tension régulée par le moteur électrique. La valeur d'ancrage est itérativement calculée selon la valeur courante desdits paramètres de vol en variant selon une valeur anticipée de la puissance mécanique à fournir par le groupe de motorisation itérativement calculée par un algorithme prédictif selon les valeurs des paramètres de vol transmises par l'unité de surveillance HUMS et/ou par une unité de contrôle des conditions de vol du giravion.

Selon le document US 7 262 712, le dispositif d'alerte est formé d'un vibreur générant des vibrations dont l'amplitude et la fréquence varient selon l'évolution de l'urgence d'intervention du pilote sur le comportement du giravion. L'urgence d'intervention du pilote est déterminée par l'unité de calcul selon les valeurs de divers paramètres de vol fournies par l'instrumentation de bord du giravion, tels que les valeurs de la température des gaz en sortie de la turbine haute pression des moteurs ainsi que les valeurs du couple ou de la vitesse développés par le ou les moteurs selon les phases de vol du giravion.

En outre et tel que présenté par le document EP 2 631 172, il est également connu une méthode de mise en oeuvre d'un dispositif d'alerte par signaux tactiles équipant un organe de commande de vol d'un giravion. Un tel dispositif d'alerte comporte ainsi notamment :
- un organe d'alerte comprenant un « vérin de trim », l'organe d'alerte étant générateur d'une sensation tactile perceptible par le pilote au niveau de l'organe de commande,
- une unité de commande de vol permettant d'identifier une donnée de commande relative à une requête par le pilote d'une portance à fournir par le rotor principal et qui est déduite en fonction d'une donnée de position fournie à l'unité de commande par un capteur de position, et
- une unité prédictive qui calcule itérativement à une certaine fréquence une marge de puissance relative à la puissance disponible du moteur par différence entre une puissance prédite et une limite de puissance relative à la puissance à fournir par le moteur en fonction de son régime de fonctionnement courant.

Cependant, la structure et les conditions d'exploitation de tels dispositifs d'alerte par signaux tactiles ne sont pas pleinement satisfaisantes dans le cadre des contraintes de fonctionnement général d'un giravion qui sont de plus en plus complexes.

De telles contraintes sont notamment relatives à l'organisation des différentes chaînes de commande de vol procurant la génération et la transmission des commandes de vol visant à manoeuvrer autour de leur axe de variation de pas les pales du ou des rotors équipant le giravion, rotor principal notamment.

Le but de la présente invention est de proposer des modalités de génération et de transmission à un pilote humain d'un giravion d'une alerte par signaux tactiles relative à une requête excessive en puissance mécanique à fournir par un groupe de motorisation équipant le giravion.

Plus particulièrement, la présente invention vise à proposer une méthode de mise en oeuvre d'un dispositif d'alerte par signaux tactiles équipant un organe de commande de vol à entraînement par l'homme équipant un giravion.

Ledit organe de commande de vol est plus particulièrement dédié à la manoeuvre par un pilote humain d'une variation du pas des pales d'un rotor principal du giravion, indifféremment collectivement ou cycliquement, par l'intermédiaire d'une dite chaîne principale de commande de vol.

Par ailleurs, un tel organe de commande de vol fait partie de la chaîne principale de commande de vol. Il peut ainsi être de type mécanique et provoque dans ce cas directement un déplacement d'au moins une servocommande.

Comme déjà évoqué, l'organe de commande de vol peut également comporter des moyens de détection de type optique ou électrique délivrant un signal représentatif de la position courante de l'organe de commande de vol. Un tel signal optique ou électrique est alors transmis à un calculateur permettant de générer un signal de commande d'une servocommande de la chaîne principale de commande de vol qui est dans ce cas partiellement mécanique et partiellement électrique ou optique.

La démarche de la présente invention relève des modalités de mise en oeuvre d'un tel dispositif d'alerte par signaux tactiles, permettant d'exploiter un « vérin de trim » relié audit organe de commande de vol pour fournir au pilote des alertes par signaux tactiles relatives à une potentielle exploitation excessive des capacités du groupe de motorisation à fournir la puissance mécanique requise par le giravion.

Dans le contexte d'une telle démarche, la méthode de la présente invention est recherchée s'inscrivant dans l'environnement complexe de régulation et de contrôle du fonctionnement des divers organes du giravion. Il est souhaitable que la méthode de la présente invention puisse être mise en oeuvre en ne modifiant pas ou peu l'architecture générale de l'organisation des moyens procurant de tels régulation et contrôle des modalités de fonctionnement global du giravion.

Il est aussi souhaitable dans le contexte d'une telle démarche que les modalités mises en oeuvre pour fournir au pilote des signaux tactiles par l'intermédiaire du « vérin de trim » soient aptes à être exploitées pour activer un vibreur équipant l'organe de commande de vol, en complément des alertes par signaux tactiles fournies au pilote par l'intermédiaire du « vérin de trim ».

Dans ce contexte, il est opportun que le pilote humain du giravion, disposant de peu de temps pour réagir en cas d'alertes, soit apte à différencier rapidement les causes des alertes émises par signaux tactiles pour lui permettre d'intervenir le plus rapidement possible et de manière la mieux adaptée possible sur l'attitude en vol du giravion.

Toujours selon une telle approche, il est aussi souhaitable que le ou les signaux tactiles générés par le dispositif d'alerte soient immédiatement interrompus dès lors que les causes ayant générées ce ou ces signaux tactiles sont supprimées sous l'effet d'une intervention du pilote. En effet, il est souhaitable de libérer au mieux le pilote d'une surcharge de travail en cas de situation d'urgence et notamment de limiter le nombre possible d'alertes simultanément transmises au pilote humain par divers organes du giravion identifiant potentiellement diverses causes d'alerte spécifiques.

La méthode de la présente invention est une méthode de mise en oeuvre d'un dispositif d'alerte par signaux tactiles équipant un organe de commande de vol à entraînement par l'homme équipant un giravion.

Ledit organe de commande de vol fait partie d'une chaîne principale de commande provoquant une variation du pas des pales d'au moins un rotor principal du giravion procurant essentiellement la sustentation du giravion.

Le giravion est équipé d'un groupe de motorisation fournissant une puissance mécanique au moins exploitée pour l'entraînement en rotation du rotor principal.

Le giravion est en outre équipé d'au moins une chaîne annexe de commande comprenant un pilote automatique générateur d'ordres de commande de vol. Un tel pilote automatique contrôle la mise en oeuvre au moins d'un « vérin de trim » motorisé à ancrage placé en parallèle à ladite chaîne principale de commande.

Le giravion est potentiellement équipé d'un dispositif à retour d'efforts mettant en oeuvre le « vérin de trim » pour générer un effort résistant à l'encontre d'un entraînement par l'homme de l'organe de commande de vol.

Ledit effort résistant est provoqué par le dispositif à retour d'efforts selon les commandes de vol opérées par le pilote humain du giravion. Ledit effort résistant varie selon une activation de la motorisation du « vérin de trim » par le dispositif à retour d'efforts en faisant varier la position d'ancrage du « vérin de trim » sur la chaîne principale de commande de vol.

Il est compris que l'organisation du dispositif à retour d'efforts vise typiquement à communiquer par voie tactile au pilote humain une sensation d'efforts proportionnelle aux commandes de vol qu'il opère, pour lui permettre d'appréhender le couple résistant opposé par le rotor principal à l'encontre de son entraînement par le groupe de motorisation équipant le giravion.

Il est cependant bien évidemment compris que l'équipement du giravion par un tel dispositif à retour d'efforts, quoique préféré, est subsidiaire et indépendant du fonctionnement et de la mise en oeuvre du dispositif d'alerte conformément à la méthode proposée par la présente invention.

Le giravion est en outre aussi équipé d'une unité prédictive pour calculer itérativement à fréquence donnée au moins une marge de puissance selon le régime de régulation courant du groupe de motorisation.

Plus particulièrement, cette marge de puissance est relative à la puissance disponible du groupe de motorisation et est calculée par l'unité prédictive par différence entre une puissance prédite et une limite de puissance relative à une puissance à fournir par le groupe de motorisation prédéfinie selon le régime de régulation courant du groupe de motorisation.

Dans ce contexte de fonctionnement du giravion, et notamment de la mise sous dépendance du « vérin de trim » par le pilote automatique, la méthode de la présente invention est principalement reconnaissable en ce que le dispositif d'alerte comprend un premier organe de calcul, dit unité d'alerte, un deuxième organe de calcul, formé par ladite unité prédictive, un troisième organe de calcul, dit unité de gestion d'efforts, ainsi qu'au moins un organe d'alerte générateur d'une sensation tactile perceptible par le pilote humain par l'intermédiaire de l'organe de commande de vol.

Ledit au moins un organe d'alerte comprend au moins ledit « vérin de trim » opposant un effort résistant à l'encontre de l'entraînement par l'homme de l'organe de commande de vol.

Conformément à un tel choix d'organisation structurelle du dispositif d'alerte, une difficulté à surmonter réside dans les modalités de mise en oeuvre du « vérin de trim » dans le cadre de la génération d'une alerte tactile dépendante d'une marge de puissance disponible que doit fournir le groupe de motorisation selon son régime courant de régulation pour entraîner le rotor principal.

Ladite difficulté réside notamment dans un choix qui doit être fait d'une méthode de mise en oeuvre du « vérin de trim » permettant de générer une alerte tactile progressive prenant en compte différentes contraintes. De telles contraintes sont liées notamment à :
-) la pertinence de la mise en oeuvre du « vérin de trim » dans le contexte de son utilisation alternative potentielle par d'autres dispositifs équipant le giravion, tel que notamment le pilote automatique générant des ordres de commandes de vol activant le « vérin de trim » pour stabiliser et/ou guider le giravion en vol. En effet, une modification de la position d'ancrage du « vérin de trim » visant à procurer une alerte tactile doit s'inscrire dans l'environnement global de son exploitation à bord du giravion en vol.
-) la pertinence des alertes tactiles générées selon l'urgence d'intervention du pilote sur le comportement en vol du giravion, dans le contexte d'un traitement fiable et pertinent d'informations nombreuses et complexes devant être prises en compte pour mettre en oeuvre de manière adaptée au moins le « vérin de trim », mais aussi et de préférence un vibreur. Des choix doivent être faits pour collecter et traiter de telles informations utiles non seulement pour générer lesdites alertes tactiles mais aussi pour coordonner les diverses exploitations potentielles du « vérin de trim » par d'autres dispositifs équipant le giravion.
-) la contrainte d'une exploitation d'un « vérin de trim » motorisé à ancrage, de préférence de type actif c'est-à-dire procurant un effort résistant à partir d'un couple résistant opposé par sa motorisation, le gradient d'effort dudit couple résistant variant selon la position d'ancrage du « vérin de trim » en l'absence d'un ressort précontraint tel que pour un « vérin de trim » motorisé à ancrage de type passif.
-) la contrainte d'une mise en oeuvre du dispositif d'alerte préservant le confort de pilotage et évitant d'accroître la tension nerveuse du pilote soumis à une situation d'urgence.
   Il doit notamment être évité une génération soutenue et intempestive des signaux tactiles par le dispositif d'alerte. Il est souhaitable que la génération des signaux tactiles soit graduée selon des modalités clairement et rapidement identifiables par le pilote selon la cause de l'urgence d'intervention sur le comportement du giravion. Il est aussi souhaitable que les signaux tactiles générés soient interrompus dès lors que les causes ayant générés les signaux tactiles sont supprimées.
-) la contrainte, au regard du confort de pilotage et de la pertinence des informations collectées relatives aux réactions du pilote en situation d'urgence pour rétablir une évolution sécurisée du giravion en vol, de la prise en compte des éventuelles frictions auxquelles sont classiquement soumises les chaînes cinématiques à transmission mécanique de mouvement exploitées pour manoeuvrer en variation de pas les pales d'un rotor de giravion.

Bien évidemment, la liste qui vient d'être faite des difficultés à surmonter n'est pas exhaustive et d'autres utilités, avantages et résultats techniques procurés par la présente invention apparaîtront implicitement ou explicitement à la lecture de la description qui va en être faite.

Selon la méthode de la présente invention, il est en premier lieu fait le choix d'exploiter, indépendamment de la structure propre du « vérin de trim » motorisé à ancrage, des organes aptes à fournir à l'unité d'alerte une donnée de commande fournie par l'unité de gestion d'efforts.

Plus particulièrement, l'unité de gestion d'efforts génère une donnée de commande relative à une requête par l'homme d'une portance à fournir par le rotor principal. Une telle donnée de commande est par ailleurs fonction d'une donnée de position et/ou d'une donnée d'efforts.

La donnée de position est fournie à l'unité de gestion d'efforts par un capteur de position mesurant une position courante de l'organe de commande de vol.

La donnée d'efforts est quant à elle fournie à l'unité de gestion d'efforts par un dispositif à mesure d'efforts en prise sur ladite chaîne principale de commande, comprenant par exemple une bielle d'efforts en prise sur l'organe de commande de vol. Ladite donnée d'efforts est ainsi représentative des efforts de manoeuvre de la chaîne principale de commande sous l'effet d'un entraînement par l'homme de l'organe de commande de vol lorsque le « vérin de trim » est maintenu ancré sur la chaine principale de commande. Ainsi, un tel « vérin de trim » est agencé dans une position d'ancrage prédéfinie, de sorte qu'il génère un effort résistant à l'encontre de la manoeuvre de la chaîne principale de commande. Un tel effort peut alors être constant ou encore variable selon une loi d'efforts prédéterminée.

Toujours selon la méthode de la présente invention, il est en deuxième lieu fait le choix que l'unité prédictive calcule préalablement ladite puissance prédite par sommation entre une puissance courante du groupe de motorisation et une variation de puissance à fournir par le groupe de motorisation requise sous l'effet de l'entraînement par l'homme de l'organe de commande de vol. Il est proposé plus particulièrement de déduire par l'unité prédictive ladite variation de puissance requise selon une donnée de commande fonction d'au moins la donnée de position.

Toujours selon la méthode de la présente invention, il est en troisième lieu fait le choix d'exploiter l'unité d'alerte pour collecter l'une au moins des données choisies parmi le groupe comportant :
*) la donnée de commande fonction de l'une au moins de la donnée de position fournie par le capteur de position et de la donnée d'efforts fournie par le dispositif à mesure d'efforts,
*) au moins une première dite marge de puissance fournie par l'unité prédictive par différence entre ladite puissance prédite et une première dite limite de puissance,
*) une donnée d'état relative à une activation d'au moins un quelconque mode supérieur de fonctionnement du pilote automatique provoquant la mise en oeuvre de la chaine principale de commande en procurant classiquement un guidage du giravion suivant au moins un axe de progression typiquement affecté à un mode supérieur de fonctionnement du pilote automatique, tel que notamment respectivement au moins suivant l'axe de gravité, voire aussi en tangage ou en roulis.

Conformément à de tels choix, il est proposé d'exploiter l'unité d'alerte pour générer une commande d'ancrage du « vérin de trim » sur la chaîne principale de commande. Ladite commande d'ancrage est générée sous conditions à la fois de ladite première marge de puissance et de la donnée de commande comprenant indifféremment une donnée de position et/ou une donnée d'efforts relative à une requête d'accroissement de la portance à fournir par le rotor principal.

Par suite de la génération par l'unité d'alerte de ladite commande d'ancrage du « vérin de trim », l'unité prédictive régule l'activation de la motorisation du « vérin de trim » et par suite régule une position d'ancrage du « vérin de trim » sur la chaîne principale de commande faisant varier l'effort résistant opposé par le « vérin de trim » à l'encontre de l'entraînement par l'homme de l'organe de commande de vol.

Conformément à la démarche de la présente invention, il est essentiel de prendre en compte les conditions d'interruption de la commande d'ancrage du « vérin de trim » par l'unité d'alerte selon les réactions du pilote en maintenant disponible une potentielle exploitation alternative du « vérin de trim » par d'autres dispositifs équipant le giravion.

Par ailleurs, il est souhaité que les modalités d'interruption de la commande d'ancrage du « vérin de trim » et de la variation de l'effort résistant qu'il produit autorisent les choix suivants :
-) anticiper des dispositions prises subsidiairement pour éviter un éventuel sentiment d'inconfort pour le pilote en raison de la libération de la chaîne principale de commande vis-à-vis de l'ancrage du « vérin de trim » par suite de l'interruption par l'unité d'alerte de la commande d'ancrage du « vérin de trim »,
-) permettre au pilote humain du giravion de lâcher l'organe de commande de vol et par suite d'interrompre son entraînement par l'homme, sans pour autant cesser d'interrompre la potentielle génération par l'unité d'alerte des signaux tactiles.

Dans ce contexte, l'unité d'alerte cesse de générer la commande d'ancrage du « vérin de trim » lorsque l'unité de gestion d'efforts génère une donnée de commande représentative d'une requête par l'homme d'une réduction de la portance à fournir par le rotor principal, l'homme exerçant sur l'organe de commande de vol un effort de manoeuvre s'opposant à un effort résistant du «vérin de trim ».

De préférence, la méthode comprend en outre une opération de comparaison par l'unité d'alerte entre la valeur de la première marge de puissance et un premier seuil de puissance défini conformément au régime de régulation courant. L'unité d'alerte cesse de générer la commande d'ancrage du « vérin de trim » lorsque les conditions suivantes sont vérifiées :
-) l'unité de gestion d'efforts génère une donnée de commande relative à une donnée de position identifiant une absence d'entraînement par l'homme de l'organe de commande de vol,
-) l'unité d'alerte identifie une valeur de la première marge de puissance supérieure ou égale audit premier seuil de puissance.

Selon diverses variantes possibles de réalisation, l'unité prédictive régule ladite activation de la motorisation du « vérin de trim » en fonction de la variation de valeur indifféremment de la donnée de position et/ou de la donnée d'efforts et/ou en fonction de la variation de la première marge de puissance.

Par suite de la génération de la commande d'ancrage par l'unité d'alerte, une donnée d'ancrage relative à la position courante d'ancrage du « vérin de trim » sur la chaîne principale de commande est de préférence fournie par l'unité d'alerte au moins au pilote automatique, voire à tout autre dispositif du giravion exploitant le « vérin de trim » indépendamment du dispositif d'alerte.

Selon une forme préférée de la méthode de la présente invention, ledit au moins un organe d'alerte comprend un vibreur implanté sur l'organe de commande de vol. Dans ce cas, l'unité d'alerte collecte en outre une deuxième dite marge de puissance fournie par l'unité prédictive par différence entre ladite puissance prédite et une deuxième dite limite de puissance.

L'unité d'alerte est génératrice d'une commande d'activation du vibreur sous conditions cumulées d'une collecte par l'unité d'alerte d'une part de ladite deuxième marge de puissance et d'autre part indifféremment d'une donnée de position et/ou d'une donnée d'efforts relative à une requête d'accroissement de la portance à fournir par le rotor principal,

La génération par l'unité d'alerte de la commande d'activation du vibreur est interrompue par suite d'une identification par l'unité d'alerte d'une valeur de la deuxième marge de puissance supérieure à un deuxième seuil de puissance prédéfini conformément au régime de régulation courant.

Selon une forme avantageuse de la méthode de la présente invention, la commande d'ancrage du « vérin de trim » est conditionnée par une prise en compte de la résistance intrinsèque de la chaîne principale de commande à l'encontre de sa manoeuvre, par comparaison par l'unité d'alerte entre la première marge de puissance et un troisième seuil de puissance prédéfini.

De telles dispositions permettent de limiter la génération intempestive de ladite commande d'ancrage dès que ladite première marge de puissance est transmise à l'unité d'alerte sans prise en compte d'éventuelles manoeuvres de la chaîne principale de commande opérées rapidement par le pilote du giravion en situation d'urgence. Il en ressort que le confort de pilotage par le pilote humain en est amélioré en évitant la génération soutenue sur une brève durée des signaux tactiles générés par l'unité d'alerte.

De préférence, la commande d'activation du vibreur par l'unité d'alerte est en outre conditionnée, de même et pour procurer le même résultat que celui qui vient d'être mentionné, par une prise en compte de la résistance intrinsèque de la chaîne principale de commande à l'encontre de sa manoeuvre, par comparaison par l'unité d'alerte entre la deuxième marge de puissance et un quatrième seuil de puissance prédéfini.

Selon une forme préférée de la méthode de la présente invention, ladite donnée de commande provoquant l'interruption de l'ancrage du « vérin de trim » est fonction des conditions cumulées comprenant :
-) d'une part une donnée d'efforts inférieure ou égale à un seuil d'efforts prédéfini, une telle donnée d'efforts ainsi que le seuil d'efforts prédéfini étant négatifs en valeur algébrique car orientés dans le sens d'une diminution de portance à fournir par le rotor principal du giravion, et
-) d'autre part une donnée de position identifiant un entraînement de l'organe de commande de vol par l'homme, notamment par identification d'une variation de position de l'organe de commande de vol.

Selon une forme subsidiaire de la méthode de la présente invention, les vibrations générées par le vibreur varient indifféremment en fréquence et/ou en amplitude selon la variation de la valeur de la deuxième marge de puissance.

De préférence pour éviter une confusion par le pilote humain entre différents seuils d'urgence d'intervention sur le comportement en vol du giravion, les signaux tactiles respectivement produits par le «vérin de trim » et par le vibreur sont affectés à de tels seuils d'urgence respectifs d'intervention du pilote humain sur le comportement en vol du giravion. Plus particulièrement, une ségrégation des exploitations du « vérin de trim » et du vibreur pour générer alternativement des signaux tactiles est placée sous la dépendance de régimes de régulation respectifs du groupe de motorisation.

En effet, le fonctionnement du groupe de motorisation est régulé selon des régimes de régulation prédéfinis dont des régimes communément désignés par AEO (All Engine Operative) comprenant un régime dit PMT (Puissance Maximum Transitoire), un régime dit PMD (Puissance maximum au décollage) et un régime dit PMC (Puissance Maximum Continue), ainsi que des régimes communément désignés par OEI (One Engine Inoperative, cas de panne de l'un des moteurs du giravion) dont un régime dit OEI-très courte durée, un régime dit OEI-courte durée et un régime dit OEI-continu.

Tel que déjà mentionné, de tels régimes de régulation sont typiques et parfaitement connus de l'homme du métier des giravions, notamment conformément à la définition et aux explications qui en ont été faites précédemment.

A cet effet, les mises en oeuvre respectives du « vérin de trim » et du vibreur par le dispositif d'alerte sont sélectivement opérées selon le régime courant de régulation du groupe de motorisation. L'ancrage du « vérin de trim » et l'activation du vibreur sont notamment opérés conformément aux modalités suivantes :
-) mise en oeuvre du « vérin de trim » pour un régime de régulation courant du groupe de motorisation relevant des régimes de régulation comprenant le régime PMD, le régime PMC, le régime OEI-courte durée et le régime OEI-continu,
-) mise en oeuvre du vibreur pour un régime de régulation courant du groupe de motorisation relevant des régimes de régulation comprenant le régime PMT et le régime OEI-très courte durée.

Par ailleurs, les valeurs respectives de l'une au moins de la première limite de puissance et de la deuxième limite de puissance varient de préférence selon la vitesse d'avancement du giravion. Plus particulièrement, les valeurs de la première limite de puissance et de la deuxième limite diminuent depuis un avancement du giravion à basses vitesses vers un avancement du giravion à vitesses élevées en vol de croisière.

Plus spécifiquement, la valeur de la première limite de puissance varie selon les modalités suivantes :
-) à basses vitesses d'avancement du giravion, en régime de régulation PMD et en régime de régulation OEI-courte durée, la valeur de la première limite de puissance est constante,
-) à vitesses transitoires d'avancement du giravion entre les basses vitesses et les vitesses élevées d'avancement du giravion identifiant typiquement une progression du giravion en vol de croisière, la valeur de la première limite de puissance est dégressive par suite d'un passage du régime de régulation AEO du groupe de motorisation depuis le régime PMD vers le régime PMC. La valeur de la première limite de puissance est aussi dégressive par suite d'un passage du régime de régulation OEI du groupe de motorisation depuis le régime OEI-courte durée vers le régime OEI-continu,
-) auxdites vitesses élevées d'avancement du giravion, en régime de régulation PMC et en régime de régulation OEI (One Engine Inoperative) longue durée, la valeur de la première limite de puissance est constante.

Plus spécifiquement encore, la valeur de la deuxième limite de puissance varie selon les modalités suivantes :
-) à basses vitesses d'avancement du giravion, en régime de régulation PMT et en régime de régulation OEI-très courte durée, la valeur de la deuxième limite de puissance est constante,
-) à vitesses transitoires d'avancement du giravion entre les basses vitesses et les vitesses élevées d'avancement du giravion, la valeur de la deuxième limite de puissance est dégressive en régime de régulation PMT et est constante en régime de régulation OEI-très courte durée,
-) à vitesses élevées d'avancement du giravion, la valeur de la deuxième limite de puissance est constante en régime de régulation PMT et en régime de régulation OEI-très courte durée.

De préférence, le calcul de ladite au moins une marge de puissance est plus particulièrement opéré par l'unité prédictive selon les modalités suivantes :
-) calculer la puissance prédite par sommation entre la puissance courante fournie par le groupe de motorisation conformément à l'application du régime de régulation courant et une requête en puissance (indifféremment positive ou négative) à fournir par le groupe de motorisation calculée par l'unité prédictive à partir de la donnée de commande,
-) calculer ladite au moins une marge de puissance par soustraction entre la puissance prédite et de la limite de puissance.

Selon une forme préférée de la méthode de la présente invention, la régulation de l'activation de la motorisation du « vérin de trim » est opérée par l'unité prédictive calculant itérativement à fréquence donnée une commande de position d'ancrage du « vérin de trim » selon les modalités suivantes :
-) calcul d'une marge de position relative à la variation de la position de l'organe de commande de vol admise par rapport à la première marge de puissance. Ladite marge de position est calculée en divisant la première marge de puissance par une constante prédéfinie, bien évidemment prédéfinie selon la structure du giravion, identifiant une variation de puissance, potentiellement positive ou négative, pour une variation de position de l'organe de commande de vol donnée, puis
-) déduire ladite commande de position d'ancrage du « vérin de trim » par sommation de la marge de position préalablement calculée et la position courante de l'organe de commande de vol identifiée par la donnée de position fournie par le capteur de position,
-) générer un ordre d'activation de la motorisation du « vérin de trim » selon la commande de position d'ancrage du « vérin de trim » préalablement déduite.

L'ordre d'activation de la motorisation du « vérin de trim » générée par l'unité prédictive identifie plus particulièrement une position d'ancrage du « vérin de trim » et une vitesse de manoeuvre du « vérin de trim » par la motorisation dont il est équipé.

La vitesse de manoeuvre du « vérin de trim » est notamment calculée selon la variation de la position d'ancrage du « vérin de trim » et selon le mode de régulation courant du groupe de motorisation.

Il est à relever que le « vérin de trim » mis en oeuvre par la méthode de la présente invention peut être un «vérin de trim » motorisé à ancrage de type actif ou un « vérin de trim » motorisé à ancrage de type passif, tels que précédemment définis.

Il est cependant fait le choix de mettre préférentiellement en oeuvre un « vérin de trim » motorisé à ancrage de type actif et de compléter les modalités prévues d'interruption par l'unité d'alerte de l'ancrage du « vérin de trim » sur la chaîne principale de commande par des dispositions améliorant le confort de pilotage par le pilote humain du giravion lorsque la génération par l'unité d'alerte de la commande d'ancrage du « vérin de trim » est interrompue.

En effet pour améliorer la pertinence de la perception par le pilote humain des alertes tactiles générées, il est utile d'interrompre la variation de l'effort résistant opposé par le « vérin de trim » sous dépendance de l'unité d'alerte dès que l'intervention du pilote humain sur l'organe de commande de vol permet de réduire suffisamment la requête en puissance à fournir par le groupe de motorisation pour interrompre la génération du signal tactile produit par le « vérin de trim ».

In est rappelé que ledit signal tactile est relatif à une variation de l'effort résistant opposé par le « vérin de trim » à l'encontre de la manoeuvre de la chaîne principale de commande sous l'effet d'un entraînement par l'homme de l'organe de commande de vol et que ledit effort résistant opposé par le « vérin de trim » est interrompu par suite de l'interruption de la commande d'ancrage du « vérin de trim » par l'unité d'alerte.

Cependant dans ce cas, le pilote entraînant l'organe de commande de vol risque d'être confronté à une brusque libération de la chaîne principale de commande vis-à-vis de l'emprise exercée par le « vérin de trim », dont l'ancrage commandé par l'unité d'alerte est interrompue par suite de l'entraînement par le pilote humain de l'organe de commande de vol provoquant la réduction de la requête en puissance à fournir par le groupe de motorisation.

Il en ressort alors qu'une solution doit être trouvée pour procurer dans ce cas un confort de pilotage pour le pilote humain en situation d'urgence. Une telle solution doit s'inscrire dans la prise en compte de la possibilité offerte d'une génération par l'unité d'alerte des signaux tactiles, y compris dans le cas où le pilote lâche temporairement l'organe de commande de vol conformément aux modalités susvisées prévues d'interruption de la génération de la commande d'ancrage par l'unité d'alerte.

Dans ce contexte, il est de préférence proposé par suite de l'interruption de la génération de la commande d'ancrage par l'unité d'alerte de placer le « vérin de trim » motorisé à ancrage de type actif selon un mode de configuration en friction. Conformément à un tel mode de configuration en friction, le « vérin de trim » est classiquement maintenu ancré sur la chaîne principale de commande en générant un effort résistant, dit effort de friction, d'une valeur supérieure à la valeur absolue dudit seuil d'effort.

Par exemple, le « vérin de trim » peut être placé conformément au mode de configuration en friction par le pilote automatique disposant notamment de la position d'ancrage courante du « vérin de trim » tel que précédemment visé.

Il est aussi à relever que l'organe de commande de vol équipé dudit au moins un organe d'alerte mis en oeuvre conformément à la méthode de l'invention est potentiellement un organe de commande de vol provoquant une quelconque variation du pas des pales du rotor principal, notamment indifféremment collectivement et/ou cycliquement.

Cependant, le ou les organes d'alerte sont de préférence prioritairement implantés sur un organe de commande de vol dédié à la manoeuvre collective en variation de pas des pales du rotor principal et subsidiairement aussi sur un organe de commande de vol dédié à la manoeuvre cyclique en variation de pas des pales du rotor principal.

Un exemple de réalisation de la présente invention va être décrit en relation avec les figures des planches annexées, dans lesquelles :
- la fig.1 est un schéma illustrant l'organisation générale d'un dispositif d'alerte équipant un giravion conformément à la présente invention.
- la fig.2 est un schéma illustrant des modalités de mise en oeuvre de différents organes d'alerte du dispositif d'alerte représenté sur la fig.1.
- les fig.3 et fig.4 sont des schémas illustrant des modalités de mise en oeuvre de différents organes d'alerte du dispositif d'alerte représenté sur la fig.1, respectivement selon différents régimes de régulation d'un groupe de motorisation équipant le giravion.
- la fig.5 est un schéma fonctionnel illustrant des modalités spécifiques de mise en oeuvre du dispositif d'alerte représenté sur la fig.1,
- la fig.6 est un schéma fonctionnel illustrant divers modes de configuration d'un « vérin de trim » motorisé à ancrage de type actif selon une forme spécifique de réalisation du dispositif d'alerte illustré sur la fig.1,
- la fig.7 est un schéma illustrant pour exemple des modalités de variation d'un effort résistant généré par un « vérin de trim » conformément aux différents modes de configuration représentés sur la fig.6.

Les organes communs représentés sur les différentes figures sont respectivement identifiés dans les descriptions propres à ces figures avec les mêmes numéros et/ou lettres de référence, sans impliquer leur représentation individuelle sur chacune des figures.

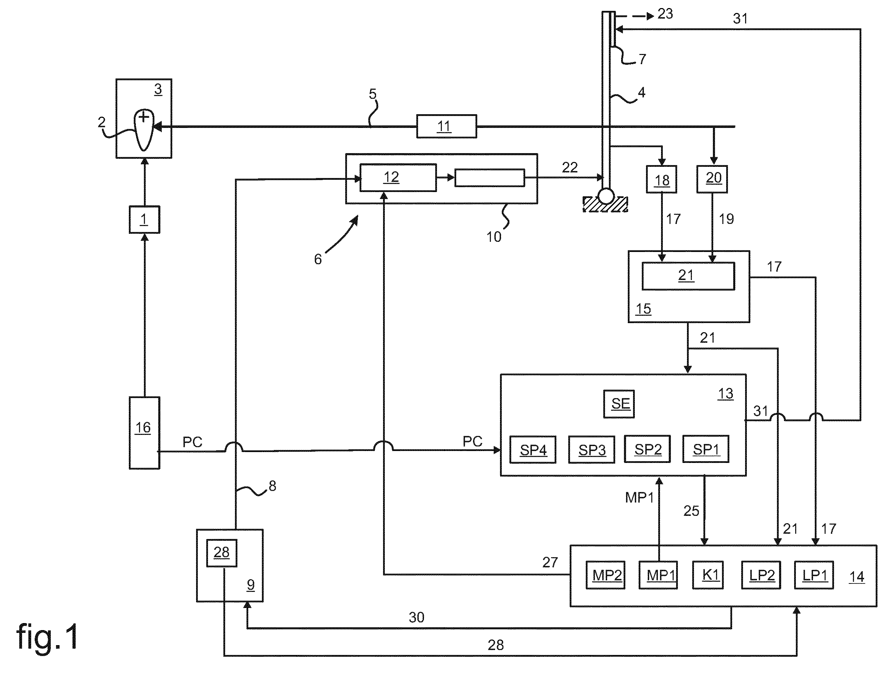

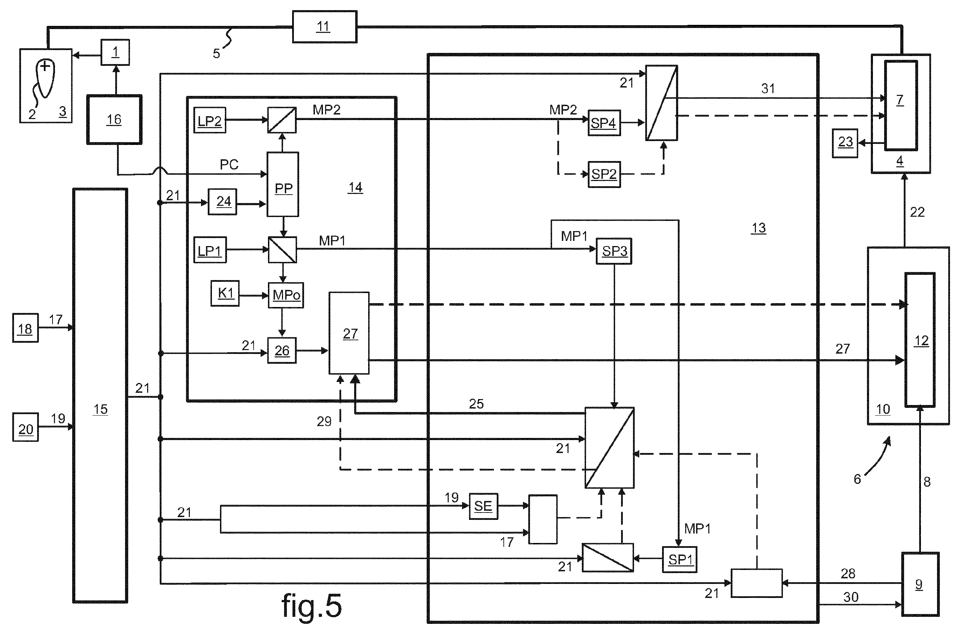

Sur la fig.1 et la fig.5, un dispositif d'alerte par signaux tactiles est organisé pour indiquer à un pilote humain d'un giravion un potentiel excès de requête en puissance mécanique à fournir par un groupe de motorisation 1 équipant le giravion. Ledit excès de requête en puissance est potentiellement provoqué par suite d'une génération par le pilote humain d'une commande en variation collective et/ou cyclique du pas des pales 2 d'au moins un rotor principal 3 équipant le giravion.

Plus particulièrement, le pilote humain du giravion dispose d'organes de commandes de vol 4 à entraînement par l'homme pour faire varier le pas des pales 2 dudit au moins un rotor principal 3 cycliquement ou collectivement par l'intermédiaire de chaînes principales de commande 5 respectives à transmission mécanique de mouvements.

Sur l'exemple de réalisation illustré, l'organe de commande de vol 4 est dédié à la commande d'une variation collective du pas des pales 2. Il est cependant compris que la méthode de la présente invention est apte à être appliquée au moyen d'un ou de plusieurs organes d'alerte 6,7 équipant prioritairement un organe de commande de vol 4 dédié à la commande d'une variation collective du pas des pales 2 et subsidiairement équipant de préférence un organe de commande de vol dédié à la commande d'une variation cyclique du pas des pales 2.

Cependant, une variation du pas des pales 2 du rotor principal 3 provoquée par suite d'un entraînement par le pilote humain de l'organe de commande de vol 4 peut générer une requête en puissance à fournir par le groupe de motorisation 1 excessive au regard du régime de régulation courant du groupe de motorisation 1.

Le régime de régulation courant du groupe de motorisation 1 est classiquement contrôlé par une unité de régulation 16 en étant sélectionné selon les conditions de vol courantes du giravion parmi plusieurs régimes de régulation AEO et OEI prédéfinis.

Par ailleurs, le giravion est équipé d'une chaîne annexe de commande 8 mettant en oeuvre un pilote automatique 9 générant des ordres de commande de vol. Le pilote automatique 9 procure, pour chacun des axes de variation d'attitude du giravion en tangage, en roulis, en verticalité et en lacet, d'une part une stabilisation de la progression en vol du giravion par application de modes de base de fonctionnement du pilote automatique 9 et d'autre part un guidage du giravion en vol par application de modes supérieurs de fonctionnement du pilote automatique 9.

Pour une chaîne principale de commande 5 donnée, telle que sur l'exemple de réalisation illustrée dédiée à la manoeuvre collective des pales 2 autour de leur axe de variation de pas individuel, les ordres de commande de vol générés par le pilote automatique 9 activent sélectivement la mise en oeuvre d'organes de manoeuvre de la chaîne principale de commande comprenant un « vérin de trim » 10 et un « vérin série » 11 (fig.1).

Typiquement tel qu'illustré sur la fig.1, le « vérin de trim » 10 est monté en parallèle à la chaîne principale de commande 5 et le « vérin série » 11 est monté en série sur la chaîne principale de commande 5.

Le « vérin de trim » 10 est plus particulièrement un « vérin de trim » motorisé à ancrage, pouvant être débrayé de la chaîne principale de commande 5 ou inversement pouvant être embrayé à une position d'ancrage souhaitée sur la chaîne principale de commande 5.

A cet effet, conformément aux modalités courantes de mise en oeuvre d'un « vérin de trim » 10 motorisé à ancrage, le pilote automatique 9 génère d'une part une commande d'ancrage du « vérin de trim » 10 sur la chaîne principale de commande 5 provoquant l'embrayage de la motorisation du « vérin de trim » 10 et d'autre part une commande de position d'ancrage du « vérin de trim » 10 provoquant alors une mise en oeuvre de la motorisation 12 du « vérin de trim » 10 en vitesse et en position pour ancrer le « vérin de trim » 10 sur la chaîne principale de commande 5 à une position d'ancrage donnée.

Dans ce contexte, le dispositif d'alerte comprend au moins un organe d'alerte 6 constitué dudit « vérin de trim » 10 et au moins un organe d'alerte constitué d'un vibreur 7 implanté sur l'organe de commande de vol 4. Par ailleurs, le dispositif d'alerte met en oeuvre une unité d'alerte 13 collectant des données fournies par une unité prédictive 14 et par une unité de gestion d'efforts 15 pour activer sélectivement les mises en oeuvre respectives du « vérin de trim » 10 et du « vibreur » 7 selon le régime de régulation courant du groupe de motorisation 1 identifié par l'unité de régulation 16.

L'unité de gestion d'efforts 15 est un moyen de calcul identifiant une donnée de commande 21 relative à un entraînement par l'homme de l'organe de commande de vol 4.

La dite donnée de commande 21 comprend l'une au moins d'une donnée de position 17 fournie par un capteur de position 18 et d'une donnée d'efforts 19 fournie par un dispositif de mesure d'efforts 20, tel que mettant en oeuvre une bielle d'efforts.

Le capteur de position 18 détecte la position courante de l'organe de commande de vol 4 et génère ladite donnée de position 17 transmise à l'unité de gestion d'efforts 15. L'unité de gestion d'efforts 15 calcule alors une éventuelle variation de position de l'organe de commande de vol 4. Le dispositif de mesure d'efforts 20 détecte l'effort résistant opposé par le « vérin de trim » 10 à l'encontre d'une manoeuvre de la chaîne principale de commande 5 et transmet à l'unité de gestion d'efforts 15 la donnée d'efforts 19.

L'unité de gestion d'efforts 15 génère au moins une donnée de commande 21 relative à une éventuelle requête en puissance à fournir par le groupe de motorisation 1 sous l'effet de l'entraînement de l'organe de commande de vol 4 par le pilote humain du giravion. La donnée de commande 21 est fournie à l'unité prédictive 14 et à l'unité d'alerte 13 par l'unité de gestion d'efforts 15.

L'unité prédictive 14 calcule itérativement à fréquence donnée au moins une marge de puissance MP1 et MP2 relative à la puissance disponible du groupe de motorisation 1 évaluée par différence entre une puissance prédite PP et au moins une limite de puissance LP1 et LP2. Plus particulièrement, l'unité prédictive 14 calcule une première marge de puissance MP1 affectée à la génération d'un premier signal tactile 22 par production d'un effort résistant opposé par le « vérin de trim » 10 à l'encontre de l'entraînement par l'homme de l'organe de commande de vol 4.

L'unité prédictive 14 calcule aussi une deuxième marge de puissance MP2 affectée à la génération d'un deuxième signal tactile 23 par production de vibrations au moyen du vibreur 7.

La puissance prédite PP est relative à la puissance à fournir par le groupe de motorisation 1 par suite d'un entraînement de l'organe de commande de vol 4 par le pilote humain du giravion.

La puissance prédite PP est calculée par l'unité prédictive 14 par sommation entre la puissance courante PC fournie par le groupe de motorisation conformément à l'application du régime de régulation courant et une variation de puissance identifiée par la donnée de commande 21 générée par l'unité de gestion d'efforts 15 par suite d'un entraînement par l'homme de l'organe de commande de vol 4.

Les limites de puissance LP1 et LP2 sont relatives à des limites de puissance à fournir par le groupe de motorisation 1 et sont prédéfinies selon le régime de régulation courant du groupe de motorisation 1 identifié par l'unité de régulation 16. Bien évidemment, les limites de puissance LP1 et LP2 affectées respectivement aux mises en oeuvre du « vérin de trim » 10 et du vibreur 7 sont de valeurs différenciées.

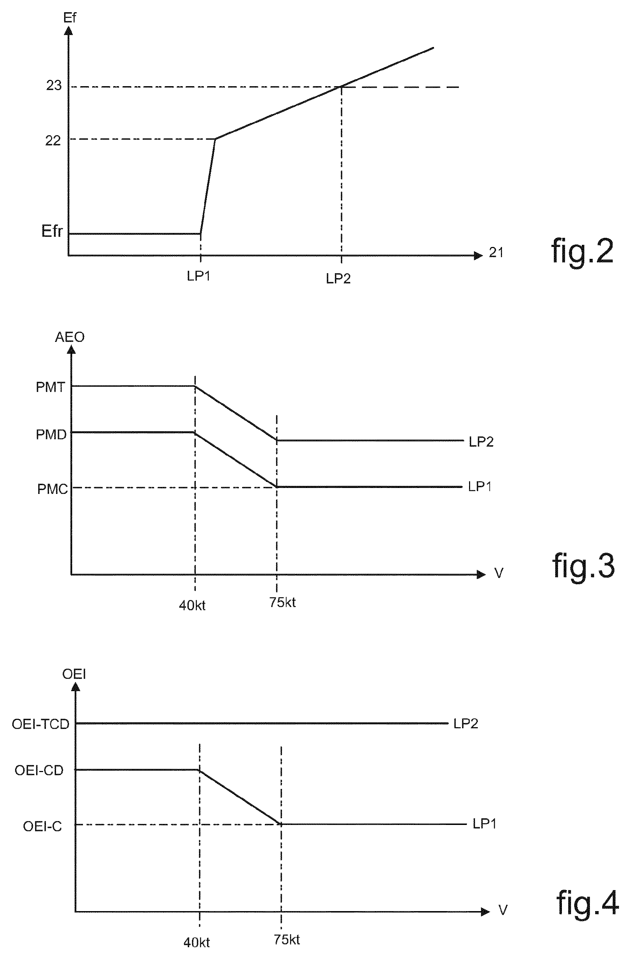

Plus particulièrement, la fig.2 illustre un gabarit d'efforts Ef en fonction des données de commande de vol 21 générées par l'unité de gestion d'efforts 15 par rapport à la première limite de puissance LP1 et par rapport à la deuxième limite de puissance LP2.

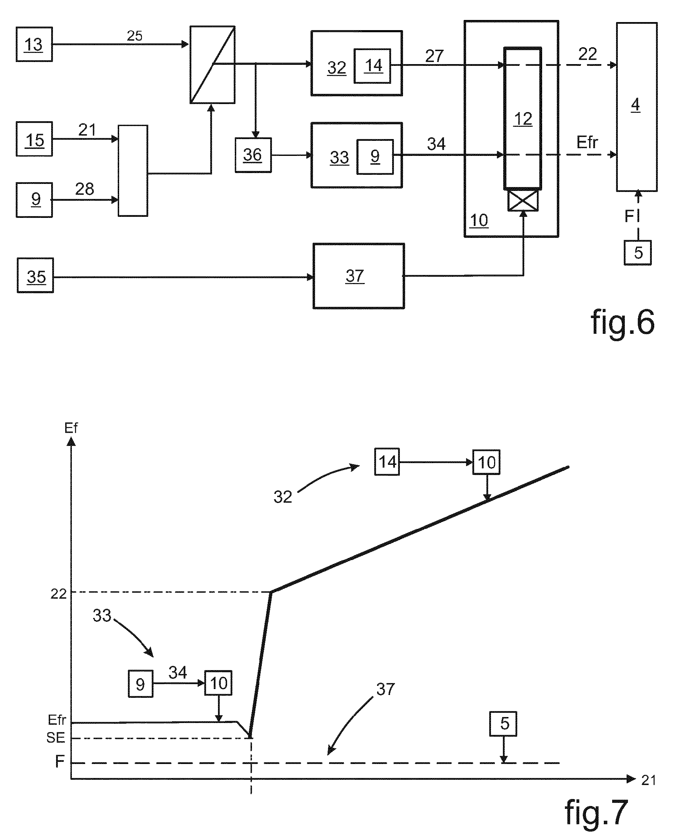

Pour une donnée de commande 21 identifiant une requête en puissance inférieure à la première limite de puissance LP1, le « vérin de trim » 10 est configuré en friction en étant placé en une position d'ancrage prédéfinie pour opposer un effort résistant constant Efr, dit effort de friction, à l'encontre de la manoeuvre de la chaîne principale de commande 5 en améliorant le confort de pilotage du giravion par le pilote humain, notamment par application des dispositions illustrées sur les fig.6 et fig.7 et commentées plus loin.

Pour une donnée de commande 21 identifiant une requête en puissance supérieure à la première limite de puissance LP1, la mise en oeuvre du « vérin de trim » 10 est provoquée pour générer le premier signal tactile 22 en opposant un effort résistant croissant à l'encontre de la manoeuvre de la chaîne principale de commande 5.

Pour une donnée de commande 21 identifiant une requête en puissance supérieure à la deuxième limite de puissance LP2, la mise en oeuvre du vibreur 7 est provoquée pour générer le deuxième signal tactile 23 par vibrations.

Il est à relever que les vibrations générées par le vibreur 7 sont potentiellement régulées par l'unité d'alerte 13 de sorte que les dites vibrations sont variables en fréquence et en amplitude selon la variation de la requête en puissance.

En outre sur les fig.3 et fig.4, les valeurs de la première limite de puissance LP1 et de la deuxième limite de puissance LP2 varient selon la vitesse d'avancement V du giravion.

Sur la fig.3 en régime de régulation AEO, les valeurs respectives de la première limite de puissance LP1 et de la deuxième limite de puissance LP2 sont constantes à basses vitesses d'avancement V du giravion, diminuent à vitesses transitoires d'avancement V du giravion et sont constantes à vitesses élevées d'avancement V du giravion.

Plus particulièrement à vitesses transitoires, la valeur de la première limite de puissance LP1 diminue entre le régime de régulation PMD et le régime de régulation PMC du groupe de motorisation 1. La valeur de la deuxième limite de puissance LP2 diminue entre basses vitesses et vitesses élevées d'avancement du giravion sous régime de régulation PMT du groupe de motorisation 1.

Sur la fig.4, sous régime de régulation OEI du groupe de motorisation 1, la valeur de la première limite de puissance LP1 est constante à basses vitesses d'avancement V du giravion sous régime de régulation OEI-courte durée (OEI-CD), diminuent à vitesses transitoires d'avancement V du giravion et est constante à vitesses élevées d'avancement V du giravion sous régime de régulation OEI-continu (OEI-C). La valeur de la deuxième limite de puissance LP2 est constante sous régime de régulation OEI-très courte durée (OEI-TCD) indépendamment de la vitesse d'avancement V du giravion.

La première limite de puissance LP1 et la deuxième limite de puissance LP2 sont prises en compte pour calculer des marges de puissance MP1 et MP2 respectives selon le régime de régulation courant du giravion. Ces dispositions permettent d'activer le « vérin de trim » 10 et le vibreur 7 par le dispositif d'alerte sélectivement isolément ou en combinaison selon l'urgence de l'intervention du pilote humain pour réduire la requête en puissance qu'il opère par entraînement de l'organe de commande de vol 4.

Il en ressort que le pilote humain est apte à apprécier tactilement l'urgence de son intervention sur l'organe de commande de vol 4 en fonction de la perception individuelle de l'un ou l'autre des différents signaux tactiles 22, 23 distinctement générés respectivement par le « vérin de trim » 10 et par le vibreur 7 selon le mode de régulation courant du groupe de motorisation 1. Le confort de pilotage du giravion par le pilote humain en est amélioré.

Sur la fig.5 plus particulièrement, l'unité d'alerte 13 active les mises en oeuvre respectives du « vérin de trim » 10 et du vibreur 7 selon les commandes de vol opérées par le pilote humain au moyen de l'organe de commande de vol 4 et selon l'identification par l'unité prédictive 14 des marges de puissance MP1 et MP2.

Plus particulièrement, la puissance prédite PP est calculée par l'unité prédictive 14 par sommation entre la puissance courante PC du groupe de motorisation 1 conforme au régime de régulation courant et la requête en puissance générée par le pilote humain entraînant l'organe de commande de vol 4. Ladite requête en puissance est calculée par l'unité prédictive 14 à partir de la donnée de commande 21 comprenant notamment la donnée de position 17 à partir de laquelle est déduite par l'unité d'alerte 13 une variation de position 24 de l'organe de commande de vol 4.

La première marge de puissance MP1 est alors déduite par l'unité prédictive 14 par différence entre la puissance prédite PP et la première limite de puissance LP1. Par suite la première marge de puissance MP1 est transmise à l'unité d'alerte 13 qui génère alors le cas échéant une commande d'ancrage 25 du « vérin de trim » sur la chaîne principale de commande 5.

La génération de la commande d'ancrage 25 par l'unité d'alerte 13 est générée sous conditions cumulées :
-) d'une réception par l'unité d'alerte 13 d'une donnée de commande 21 comprenant notamment la donnée de position 17 identifiant une commande de vol génératrice d'un accroissement de puissance à fournir par le groupe de motorisation 1.
-) d'une réception par l'unité d'alerte 13 de ladite première marge de puissance MP1, de préférence prise en compte par l'unité d'alerte 13 après déduction par comparaison d'une valeur de la première marge de puissance inférieure à un troisième seuil de puissance SP3 prédéfini.

L'unité prédictive 14 régule alors l'activation de la motorisation 12 du « vérin de trim » 10 et par suite la position d'ancrage 26 du « vérin de trim » sur la chaîne principale de commande 5.

La position d'ancrage 26 du « vérin de trim » est déduite par l'unité prédictive 14 par calcul d'une marge de position MPo relative à la variation de la position de l'organe de vol déduite de la donnée de commande 21 comprenant notamment la donnée de position 17. La marge de position MPo est calculée en divisant la première marge de puissance MP1 par une constante K1 prédéfinie identifiant une variation de puissance pour une variation de position de l'organe de commande donnée.

Par suite, l'unité prédictive 14 déduit la position d'ancrage 26 du « vérin de trim » 10 par sommation entre la marge de position MPo préalablement calculée et la position courante de l'organe de commande de vol 4 identifiée par la donnée de commande 21 et plus spécifiquement par la donnée de position 17.

L'unité prédictive 14 génère alors un ordre d'activation 27 de la motorisation 12 du « vérin de trim » 10 identifiant la position d'ancrage 26 du « vérin de trim » 10 et une vitesse de manoeuvre du « vérin de trim » 10 par la motorisation 12 dont il est équipé pour placer le « vérin de trim » dans la position d'ancrage 26 requise.

Par ailleurs, la génération par l'unité d'alerte 13 de la commande d'ancrage 25 du « vérin de trim » est potentiellement interrompue, ou par analogie est interdite en cas d'une réception par l'unité d'alerte 13 d'une donnée d'état 28 relative à un état d'activation du pilote automatique 9 en au moins un mode supérieur de fonctionnement régulant la variation collective du pas des pales 2 du rotor principal 3.

Une telle interdiction de génération de la commande d'ancrage 25 est en outre placée sous dépendance d'une détection par l'unité d'alerte 13 d'une donnée de commande 21 identifiant une absence d'entraînement par l'homme de l'organe de commande de vol 4.

Dans ce cas, l'unité d'alerte génère alors une commande d'interruption 29 de l'ancrage du « vérin de trim » 10 par l'unité d'alerte sur la chaîne principale de commande 5. Par suite de l'interruption de l'ancrage du « vérin de trim » sur la chaîne principale de commande 5, une donnée de position d'ancrage 30 est transmise au pilote automatique 9.

En outre, une telle commande d'interruption 29 de l'ancrage du « vérin de trim » 10 par l'unité d'alerte sur la chaîne principale de commande 5 est potentiellement générée par suite de la détection par l'unité d'alerte 13 d'une requête de réduction de la portance à fournir par le rotor principal 3 émise par l'homme entraînant l'organe de commande de vol 4. Une telle requête de réduction de la portance est notamment détectée à partir de la réception par l'unité d'alerte 13 d'une donnée de commande 21 identifiant une donnée d'efforts 19 inférieure ou égale à un seuil d'effort SE, la donnée d'efforts 19 et le seuil d'effort SE étant tous deux négatifs en valeur algébrique car représentatifs d'un effort orienté dans le sens d'une réduction de portance à fournir par le rotor principal 3 du giravion et identifiant une donnée de position 17 révélant un entraînement par l'homme de l'organe de commande de vol 4.

Par ailleurs selon la forme préférée de réalisation illustrée, l'unité d'alerte 13 compare la valeur de la première marge de puissance MP1 avec un premier seuil de puissance SP1 défini conformément au régime de régulation courant.

La génération par l'unité d'alerte 13 de la commande d'ancrage 25 du « vérin de trim » 10 peut être interrompue d'une part en l'absence d'un entraînement par l'homme de l'organe de commande de vol 4 détectée par l'unité de gestion d'efforts 15 et d'autre part sous condition d'une identification par l'unité d'alerte 13 d'une valeur de la première marge de puissance MP1 supérieure au premier seuil de puissance SP1. Il est dans ce cas spécifiquement pris en compte une interdiction d'un entraînement de l'organe de commande de vol 4 par le « vérin de trim » 10 provoquant une augmentation de la portance à fournir par le rotor principal 3.

En outre, l'unité d'alerte 13 est génératrice d'une commande d'activation 31 du vibreur pour générer le deuxième signal tactile 23, sous conditions cumulées :
-) d'une réception par l'unité d'alerte 13 de la deuxième marge de puissance MP2, de préférence prise en compte par l'unité d'alerte 13 après déduction par comparaison d'une valeur de la deuxième marge de puissance inférieure à un quatrième seuil de puissance SP4 prédéfini.
-) d'une donnée de commande 21 relative à une requête d'accroissement de la portance à fournir par le rotor principal 3, intégrant indifféremment une donnée de position 17 et une donnée d'efforts 19.

La génération par l'unité d'alerte 13 de la commande d'activation 31 du vibreur est interrompue par suite d'une identification par l'unité d'alerte 13 d'une valeur de la deuxième marge de puissance MP2 supérieure à un deuxième seuil de puissance SP2.

Sur les fig.6 et fig.7, le vérin de trim » 10 est plus particulièrement un « vérin de trim » motorisé à ancrage de type actif.

Tel que précédemment mentionné en relation avec les fig.1 et fig.5 notamment, le premier signal tactile 22 est généré par activation de la motorisation 12 du « vérin de trim » 10 conformément à l'ordre d'activation 27 généré par l'unité prédictive 14. Dans ce cas, la mise en oeuvre du « vérin de trim » 10 est placée sous dépendance d'un mode de configuration en alerte 32 selon lequel le « vérin de trim » 10 est générateur du premier signal d'alerte 22 en opposant un effort résistant à l'encontre de la manoeuvre de la chaîne principale de commande 5, ledit effort résistant variant selon l'ordre d'activation 27 généré par l'unité prédictive 14.

Toujours tel que précédemment mentionné, en relation avec les fig.1 et fig.5 notamment, une interruption de la commande d'ancrage 25 générée par l'unité d'alerte 13 provoque un arrêt de la génération par le « vérin de trim » 10 du premier signal d'alerte 22 sous dépendance, d'une part, d'une donnée d'état 28 relative à une activation d'au moins un mode supérieur de fonctionnement du pilote automatique 9 suivant au moins un axe de progression dont au moins l'axe de gravité, et d'autre part, d'une donnée de commande 21 relative à une donnée de position 17 identifiant une absence d'entraînement par l'homme de l'organe de commande de vol 4.

De plus en accord avec la figure 6, que ce soit pour un « vérin de trim » actif ou un « vérin de trim » passif, la combinaison entre, d'une part, une donnée d'état 28 relative à une activation d'au moins un mode supérieur de fonctionnement du pilote automatique 9 suivant au moins un axe de progression dont au moins l'axe de gravité, et d'autre part, une donnée de commande 21 relative à une donnée de position 17 identifiant une absence d'entraînement par l'homme de l'organe de commande de vol 4 permet à l'unité prédictive 14 de générer un ordre d'activation 27 de la motorisation du « vérin de trim ».

La génération de la commande d'ancrage 25 étant interrompue en combinaison avec une désactivation du pilote automatique (9) suivant au moins un axe de progression dont au moins l'axe de gravité, il est proposé de placer la mise en oeuvre du « vérin de trim » 10 sous dépendance d'un mode de configuration en friction 33, selon lequel le pilote automatique 9 génère une commande d'ancrage en friction 34 du « vérin de trim ». La commande d'ancrage en friction 34 peut être par exemple générée au moyen d'un inverseur de données 36 à partir de la commande d'ancrage 25 générée par l'unité d'alerte 13.

Selon ledit mode de configuration en friction 33, le « vérin de trim » 10 est maintenu ancré sur la chaîne principale de commande 5 en une position d'ancrage prédéfinie, de sorte que le « vérin de trim » oppose un effort résistant de préférence constant à l'encontre de la manoeuvre de la chaîne principale de commande 5 sous l'effet d'un entraînement par l'homme de l'organe de commande de vol 4. Le « vérin de trim » en mode de configuration en friction 33 produit un effort résistant Efr, dit effort de friction, dont la valeur est constante en étant d'une valeur supérieure ou égale à la valeur absolue dudit seuil d'effort SE prédéfini exploité par l'unité d'alerte 13 pour interrompre la génération de la commande d'ancrage 25.

Par ailleurs, le pilote humain dispose couramment d'un moyen de commande 35, communément désigné par « trim release », lui permettant de débrayer le « vérin de trim » de l'emprise exercée sur la chaîne principale de commande 5. Dans ce cas le « vérin de trim » est placé sous dépendance d'un mode de configuration en débrayage 37, l'ancrage du « vérin de trim » sur la chaîne principale de commande 5 étant dans ce cas inhibé.

Conformément au mode de configuration en débrayage 37, le pilote humain peut manoeuvrer l'organe de commande de vol 4 en surpassant les efforts de friction F propre à la chaîne de commande de vol 5.

## Revendications

1. Méthode de mise en oeuvre d'un dispositif d'alerte par signaux tactiles équipant un organe de commande de vol (4) à entraînement par l'homme équipant un giravion, ledit organe de commande de vol (4) faisant partie d'une chaîne principale de commande (5) provoquant une variation du pas des pales (2) d'au moins un rotor principal (3) du giravion à axe d'entraînement sensiblement vertical procurant essentiellement la sustentation du giravion,
ledit giravion étant équipé :
• d'un groupe de motorisation (1) fournissant une puissance mécanique au moins exploitée pour l'entraînement en rotation du rotor principal (3), d'au moins une chaîne annexe de commande (8) comprenant un pilote automatique (9) générateur d'ordres de commande de vol contrôlant la mise en oeuvre au moins d'un « vérin de trim » (10) motorisé à ancrage placé en parallèle à ladite chaîne principale de commande (5),
• d'une unité prédictive (14) qui calcule itérativement à fréquence donnée au moins une marge de puissance (MP1,MP2) relative à la puissance disponible du groupe de motorisation (1) par différence entre une puissance prédite (PP) et une limite de puissance (LP1,LP2) relative à une puissance à fournir par le groupe de motorisation (1) prédéfinie selon un régime de régulation courant du groupe de motorisation (1),
**caractérisée :**
**en ce que** le dispositif d'alerte comprend un premier organe de calcul, dit unité d'alerte (13), un deuxième organe de calcul, formé par ladite unité prédictive (14), un troisième organe de calcul, dit unité de gestion d'efforts (15), ainsi qu'au moins un organe d'alerte (10,7) générateur d'une sensation tactile perceptible par le pilote humain par l'intermédiaire de l'organe de commande de vol (4), ledit au moins un organe d'alerte (10,7) comprenant au moins ledit « vérin de trim » (10) opposant un effort résistant à l'encontre de l'entraînement par l'homme de l'organe de commande de vol (4), tel que :
-) l'unité de gestion d'efforts (15) génère une donnée de commande (21) relative à une requête par l'homme d'une portance à fournir par le rotor principal (3), ladite donnée de commande (21) étant fonction de l'une au moins des données choisies parmi le groupe comportant :
• une donnée de position (17) fournie à l'unité de gestion d'efforts (15) par un capteur de position (18) mesurant une position courante de l'organe de commande de vol (4) et
• une donnée d'efforts (19) fournie à l'unité de gestion d'efforts (15) par un dispositif à mesure d'efforts (20) en prise sur ladite chaîne principale de commande (5), ladite donnée d'efforts (19) étant représentative des efforts de manoeuvre dans la chaîne principale de commande (5) sous l'effet d'un entraînement par l'homme de l'organe de commande de vol (4),
-) l'unité prédictive (14) calcule ladite puissance prédite (PP) par sommation entre une puissance courante (PC) du groupe de motorisation (1) et une variation de puissance à fournir par le groupe de motorisation (1) requise sous l'effet de l'entraînement par l'homme de l'organe de commande de vol (4) et déduite par l'unité prédictive (14) selon une donnée de commande (21) fonction d'au moins ladite donnée de position (17),
-) l'unité d'alerte (13) collecte l'une au moins des données choisies parmi le groupe comportant :
*) la donnée de commande (21) fonction de l'une au moins de la donnée de position (17) fournie par le capteur de position (18) et de la donnée d'efforts fournie par le dispositif à mesure d'efforts (20),
*) au moins une première dite marge de puissance (MP1) fournie par l'unité prédictive (14) par différence entre ladite puissance prédite (PP) et une première dite limite de puissance (LP1),
*) une donnée d'état (28) relative à une activation d'au moins un quelconque mode supérieur de fonctionnement du pilote automatique (9) provoquant la mise en oeuvre de ladite chaîne principale de commande en procurant un guidage du giravion suivant au moins un axe de progression dont au moins l'axe de gravité,
**en ce que** l'unité d'alerte (13) génère une commande d'ancrage (25) du « vérin de trim » (10) sur la chaîne principale de commande (5), ladite commande d'ancrage (25) étant générée sous conditions à la fois de ladite première marge de puissance (MP1) et de ladite donnée de commande (21) fonction indifféremment d'une donnée de position (17) et/ou d'une donnée d'efforts (19) relatives à une requête d'accroissement de portance à fournir par le rotor principal (3),
**en ce que**, par suite de la génération par l'unité d'alerte (13) de ladite commande d'ancrage (25) du « vérin de trim » (10), l'unité prédictive (14) régule l'activation de la motorisation du « vérin de trim » (10) et par suite une position d'ancrage du « vérin de trim » (10) sur la chaîne principale de commande (5) faisant varier l'effort résistant opposé par le « vérin de trim » (10) à l'encontre de l'entraînement par l'homme de l'organe de commande de vol (4),
**en ce que** l'unité d'alerte (13) cesse de générer la commande d'ancrage (25) du « vérin de trim » (10) lorsque l'unité de gestion d'efforts (15) génère une donnée de commande (21) représentative d'une requête par l'homme d'une réduction de la portance à fournir par le rotor principal (3), l'homme exerçant sur l'organe de commande de vol (4) un effort de manoeuvre s'opposant à un effort résistant du «vérin de trim ».

2. Méthode selon la revendication 1,
**caractérisée :**
**en ce que** la méthode comprend en outre une opération de comparaison par l'unité d'alerte (13) entre la valeur de la première marge de puissance (MP1) et un premier seuil de puissance (SP1) défini conformément au régime de régulation courant, et
**en ce que** l'unité d'alerte (13) cesse de générer la commande d'ancrage (25) du « vérin de trim » (10) lorsque les conditions suivantes sont vérifiées :
-) l'unité de gestion d'efforts (15) génère une donnée de commande (21) relative à une donnée de position (17) identifiant une absence d'entraînement par l'homme de l'organe de commande de vol (4), et
-) l'unité d'alerte (13) identifie une valeur de la première marge de puissance (MP1) supérieure ou égale audit premier seuil de puissance (SP1).

3. Méthode selon l'une quelconque des revendications 1 et 2,
**caractérisée en ce que** l'unité prédictive (14) régule ladite activation de la motorisation du « vérin de trim » (10) en fonction de la variation de valeur indifféremment de la donnée de position (17) et/ou de la donnée d'efforts (19).

4. Méthode selon l'une quelconque des revendications 1 et 2, **caractérisée en ce que** l'unité prédictive (14) régule ladite activation de la motorisation du « vérin de trim » (10) en fonction de la variation de la première marge de puissance (MP1).

5. Méthode selon l'une quelconque des revendications 1 à 4,
**caractérisée en ce que** par suite de la génération par l'unité d'alerte (13) de la commande d'ancrage (25), une donnée d'ancrage (30) relative à la position courante d'ancrage du « vérin de trim » (10) sur la chaîne principale de commande (5) est fournie par l'unité d'alerte (13) au moins au pilote automatique (9).

6. Méthode selon l'une quelconque des revendications 1 à 5,
**caractérisée :**
**en ce que** ledit au moins un organe d'alerte (7,10) comprenant un vibreur (7) implanté sur l'organe de commande de vol (4), l'unité d'alerte (13) collecte en outre une deuxième dite marge de puissance (MP2) fournie par l'unité prédictive (14) par différence entre ladite puissance prédite (PP) et une deuxième dite limite de puissance (LP2),
**en ce que** l'unité d'alerte (13) est génératrice d'une commande d'activation (31) du vibreur (7) sous conditions cumulées d'une collecte par l'unité d'alerte (13) d'une part de ladite deuxième marge de puissance (MP2) et d'autre part indifféremment d'une donnée de position (17) et/ou d'une donnée d'efforts (19) relatives à une requête d'accroissement de la portance à fournir par le rotor principal (3), et
**en ce que** la génération par l'unité d'alerte (13) de la commande d'activation du vibreur (7) est interrompue par suite d'une identification par l'unité d'alerte (13) d'une valeur de la deuxième marge de puissance (MP2) supérieure à un deuxième seuil de puissance (SP2) prédéfini conformément au régime de régulation courant.

7. Méthode selon l'une quelconque des revendications 1 à 6,
**caractérisée en ce que** la commande d'ancrage (25) du « vérin de trim » (10) est conditionnée par une prise en compte de la résistance intrinsèque de la chaîne principale de commande (5) à l'encontre de sa manoeuvre, par comparaison par l'unité d'alerte (13) entre la première marge de puissance (MP1) et un troisième seuil de puissance (SP3) prédéfini.

8. Méthode selon l'une quelconque des revendications 6 à 7,
**caractérisée en ce que** la commande d'activation (31) du vibreur (7) par l'unité d'alerte (13) est en outre conditionnée par une prise en compte de la résistance intrinsèque de la chaîne principale de commande (5) à l'encontre de sa manoeuvre, par comparaison par l'unité d'alerte (13) entre la deuxième marge de puissance (MP2) et un quatrième seuil de puissance (SP4) prédéfini.

9. Méthode selon l'une quelconque des revendications 1 à 8,
**caractérisée en ce que** ladite donnée de commande (21) provoquant l'interruption de l'ancrage du « vérin de trim » (10) est déduite des conditions cumulées comprenant d'une part une donnée d'efforts (19) inférieure ou égale à un seuil d'effort (SE) prédéfini et d'autre part une donnée de position (17) identifiant un entraînement par l'homme de l'organe de commande de vol (4).

10. Méthode selon l'une quelconque des revendications 6 à 9,
**caractérisée en ce que** les vibrations générées par le vibreur (7) varient indifféremment en fréquence et/ou en amplitude selon la variation de la valeur de la deuxième marge de puissance (MP2).

11. Méthode selon l'une quelconque des revendications 6 à 10,
**caractérisée en ce que** le fonctionnement du groupe de motorisation (1) est régulé selon des régimes de régulation prédéfinis dont des régimes AEO (All Engine Operative) comprenant un régime PMT (Puissance Maximum Transitoire), un régime PMD (Puissance maximum au décollage) et un régime PMC (Puissance Maximum Continue) ainsi que des régimes OEI (One Engine Inoperative) dont un régime OEI-très courte durée, un régime OEI-courte durée et un régime OEI-continu,
et **en ce que** les mises en oeuvre respectives du « vérin de trim » (10) et du vibreur (7) par le dispositif d'alerte sont sélectivement opérées selon le régime courant de régulation du groupe de motorisation (1), l'ancrage du « vérin de trim » (10) et l'activation du vibreur (7) étant opérés conformément aux modalités suivantes :
-) mise en oeuvre du « vérin de trim » (10) pour un régime de régulation courant du groupe de motorisation (1) relevant des régimes de régulation comprenant le régime PMD, le régime PMC, le régime OEI-courte durée et le régime OEI-continu,
-) mise en oeuvre du vibreur (7) pour un régime de régulation courant du groupe de motorisation (1) relevant des régimes de régulation comprenant le régime PMT et le régime OEI-très courte durée.

12. Méthode selon l'une quelconque des revendications 6 à 11,
**caractérisée en ce que** les valeurs respectives de l'une au moins de la première limite de puissance (LP1) et de la deuxième limite de puissance (LP2) varient selon la vitesse d'avancement du giravion, les valeurs de la première limite de puissance (LP1) et de la deuxième limite (LP2) diminuant depuis un avancement du giravion à basses vitesses vers un avancement du giravion à vitesses élevées en vol de croisière.

13. Méthode selon les revendications 11 et 12,
**caractérisé en ce que** la valeur de la première limite de puissance (LP1) varie selon les modalités suivantes :
-) à basses vitesses d'avancement du giravion, en régime de régulation PMD et en régime de régulation OEI-courte durée, la valeur de la première limite de puissance (LP1) est constante,
-) à vitesses transitoires d'avancement du giravion entre les basses vitesses et les vitesses élevées d'avancement du giravion, la valeur de la première limite de puissance (LP1) est dégressive par suite d'un passage du régime de régulation AEO du groupe de motorisation (1) depuis le régime PMD vers le régime PMC et par suite d'un passage du régime de régulation OEI du groupe de motorisation (1) depuis le régime OEI-courte durée vers le régime OEI-continu,
-) à vitesses élevées d'avancement du giravion, en régime de régulation PMC et en régime de régulation OEI (One Engine Inoperative) longue durée, la valeur de la première limite de puissance (LP1) est constante.

14. Méthode selon les revendications 11 et 12,
**caractérisé en ce que** la valeur de la deuxième limite de puissance (LP2) varie selon les modalités suivantes :
-) à basses vitesses d'avancement du giravion, en régime de régulation PMT et en régime de régulation OEI-très courte durée, la valeur de la deuxième limite de puissance (LP2) est constante,
-) à vitesses transitoires d'avancement du giravion entre les basses vitesses et les vitesses élevées d'avancement du giravion, la valeur de la deuxième limite de puissance (LP2) est dégressive en régime de régulation PMT et est constante en régime de régulation OEI-très courte durée,
-) à vitesses élevées d'avancement du giravion, la valeur de la deuxième limite de puissance (LP2) est constante en régime de régulation PMT et en régime de régulation OEI-très courte durée.

15. Méthode selon l'une quelconque des revendications 1 à 14,
**caractérisée en ce que** le calcul de ladite au moins une marge de puissance (MP1,MP2) est plus particulièrement opéré par l'unité prédictive (14) selon les modalités suivantes :
-) calculer la puissance prédite (PP) par sommation entre la puissance courante (PC) fournie par le groupe de motorisation (1) conformément à l'application du régime de régulation courant et une requête en puissance à fournir par le groupe de motorisation (1) calculée par l'unité prédictive (14) à partir de la donnée de commande (21),
-) calculer ladite au moins une marge de puissance (MP1,MP2) par soustraction entre la puissance de prédite (PP) et la limite de puissance (LP1,LP2).

16. Méthode selon l'une quelconque des revendications 1 à 15,
**caractérisée en ce que** la régulation de l'activation de la motorisation (12) du « vérin de trim » (10) est opérée par l'unité prédictive (14) calculant itérativement à fréquence donnée une commande de position d'ancrage (26) du « vérin de trim » (10) selon les modalités suivantes :
-) calcul d'une marge de position (MPo) relative à la variation de la position de l'organe de commande de vol (4) admise par rapport à la première marge de puissance (MP1), ladite marge de position (MPo) étant calculée en divisant la première marge de puissance (MP1) par une constante (K1) prédéfinie identifiant une variation de puissance pour une variation de position de l'organe de commande de vol (4) donnée, puis
-) déduire ladite commande de position d'ancrage (26) du « vérin de trim » (10) par sommation de la marge de position (MPo) préalablement calculée avec la position courante de l'organe de commande de vol identifiée par la donnée de position (17) fournie par le capteur de position (18),
-) générer un ordre d'activation (27) de la motorisation du « vérin de trim » (10) selon la commande de position d'ancrage (26) du « vérin de trim » (10) préalablement déduite.

17. Méthode selon la revendication 16,
**caractérisée en ce que** l'ordre d'activation (27) de la motorisation (12) du « vérin de trim » (10) généré par l'unité prédictive (14) identifie une position d'ancrage (25) du « vérin de trim » (10) et une vitesse de manoeuvre du « vérin de trim » (10) par la motorisation (12) dont il est équipé, calculée selon la variation de la position d'ancrage (26) du « vérin de trim » (10) et selon le mode de régulation courant du groupe de motorisation (1).

18. Méthode selon l'une quelconque des revendications 1 à 16,
**caractérisée en ce que** le « vérin de trim » (10) mis en oeuvre par la méthode est un «vérin de trim » motorisé à ancrage de type actif.

19. Méthode selon la revendication 18,
**caractérisée en ce que** par suite de l'interruption de la génération de la commande d'ancrage (25) par l'unité d'alerte (13), le « vérin de trim » (10) est placé selon un mode de configuration en friction (33) dans lequel le « vérin de trim » (10) est maintenu ancré sur la chaîne principale de commande (5) en générant un effort résistant (Efr), dit effort de friction, d'une valeur constante supérieure ou égale à la valeur absolue dudit seuil d'effort (SE).

20. Méthode selon l'une quelconque des revendications 1 à 19,
**caractérisée en ce que** l'organe de commande de vol (4) équipé dudit au moins un organe d'alerte (10,7) mis en oeuvre conformément à la méthode est un organe de commande de vol (4) provoquant une quelconque variation du pas des pales (2) du rotor principal (3).

## Patentansprüche

1. Betriebsverfahren einer Anlage zur Warnung durch taktile Signale, mit der ein von einer Bedienungsperson bedientes Flugsteuerorgan (4) eines Drehflügelflugzeugs ausgerüstet ist, wobei das Flugsteuerorgan (4) ein Teil einer Hauptsteuerkette (5) ist, die eine Änderung des Anstellwinkels von Rotorblättern (2) mindestens eines Hauptrotors (3) des Drehflügelflugzeugs mit im Wesentlichen vertikaler Antriebsachse, der im Wesentlichen den Auftrieb des Drehflügelflugzeugs erzeugt, bewirkt,
wobei das Drehflügelflugzeug ausgerüstet ist mit:
• einem Antriebsaggregat (1), welches eine mechanische Leistung liefert, die zumindest für den Drehantrieb des Hauptrotors (3) verwendet wird, mindestens einer Zusatzsteuerkette (8) mit einem Autopiloten (9), der Flugsteuerbefehle erzeugt, die den Betrieb mindestens eines "Trimm-Stellantriebs" (10) steuern, der durch Verankerung angetrieben wird und parallel zu der Hauptsteuerkette (5) angeordnet ist,
• einer Prognoseeinheit (14), die mit einer gegebenen Frequenz mindestens einen Leistungsspielraum (MP1, MP2) bezüglich der verfügbaren Leistung des Antriebsaggregats (1) schrittweise berechnet durch die Bildung der Differenz zwischen einer vorhergesagten Leistung (PP) und einer Leistungsgrenze (LP1, LP2) bezüglich einer durch das Antriebsaggregat (1) zu liefernden Leistung, die gemäß einer aktuellen Regelungsbetriebsart des Antriebsaggregats (1) vordefiniert ist,
**dadurch gekennzeichnet,**
**dass** die Warnanlage ein erstes Berechnungselement, Warneinheit (13) genannt, ein zweites Berechnungselement, das durch die Prognoseeinheit (14) gebildet wird, ein drittes Berechnungselement, Kräftemanagementeinheit (15) genannt, sowie mindestens ein Warnelement (10,7) aufweist, das eine Tastempfindung erzeugt, die von dem Piloten als Bedienungsperson über das Flugsteuerorgan (4) wahrnehmbar ist, wobei das mindestens eine Warnelement (10, 7) mindestens den "Trimm-Stellantrieb" (10) aufweist, der der Betätigung des Flugsteuerorgans (4) durch die Bedienungsperson eine Widerstandskraft entgegensetzt, wobei:
-) die Kräftemanagementeinheit (15) eine Steuerangabe (21) erzeugt in Abhängigkeit von einer Anforderung eines von dem Hauptrotor (3) zu liefernden Auftriebs durch die Bedienungsperson, wobei die Steueranfrage (21) von mindestens einer Angabe abhängt, die aus der Gruppe gewählt ist, die aufweist:
• eine Positionsangabe (17), die von einem Positionsdetektor (18), der eine aktuelle Position des Flugsteuerorgans (14) misst, an die Kräftemanagementeinheit (15) geliefert wird, und
• eine Kraftangabe (19), die von einer Vorrichtung zur Messung von Kräften (20), die auf die Hauptsteuerkette (5) einwirken, an die Kräftemanagementeinheit (15) geliefert wird, wobei die Kraftangabe (19) repräsentativ ist für Betätigungskräfte in der Hauptsteuerkette (5) unter dem Einfluss einer Betätigung des Flugsteuerorgans (4) durch die Bedienungsperson,
-) die Prognoseeinheit (14) die vorhergesagte Leistung (PP) durch Aufsummieren einer aktuellen Leistung (PC) des Antriebsaggregats (1) und einer Leistungsänderung, die von dem Antriebsaggregat (1) zu liefern ist, die durch die Betätigung des Flugsteuerorgans (4) durch die Bedienungsperson angefordert wird und von der Prognoseeinheit (14) gemäß einer Steuerangabe (21), die mindestens von der Positionsangabe (17) abhängt, abgleitet wird, berechnet,
-) die Warneinheit (13) mindestens eine von Angaben sammelt, die aus der Gruppe ausgewählt werden, die aufweist:
*) die Steuerangabe (21), die von der Positionsangabe (17), die von dem Positionsdetektor (18) geliefert, und/oder der Kraftangabe, die von der Vorrichtung zur Messung von Kräften (20) geliefert wird, abhängt,
*) mindestens einen ersten Leistungsspielraum (MP1), der von der Prognoseeinheit (14) geliefert wird als Differenz zwischen der vorhergesagten Leistung (PP) und einer ersten Leistungsgrenze (LP1),
*) eine Zustandsangabe (28) bezüglich einer Aktivierung mindestens eines beliebigen höheren Betriebsmodus' des Autopiloten (9), der die Hauptsteuerkette in Betrieb setzt, indem er eine Führung des Drehflügelflugzeugs entlang mindestens einer Vortriebsachse, von denen eine Achse mindestens die Schwerkraftachse ist, bewirkt,
**dass** die Warneinheit (13) einen Verankerungsbefehl (25) des "Trimm-Stellantriebs" (10) in der Hauptsteuerkette (5) erzeugt, wobei der Verankerungsbefehl (25) gleichzeitig unter Bedingungen des ersten Leistungsspielraums (MP1) und der Steuerangabe (21) erzeugt wird, die in gleicher Weise von einer Positionsangabe (17) und/oder einer Kraftangabe (19) bezüglich einer Anforderung einer Steigerung des Auftriebs, der von dem Hauptrotor (3) zu liefern ist, abhängt,
**dass** infolge der Erzeugung des Befehls der Verankerung (25) des Trimm-Stellantriebs (10) durch die Warneinheit (13) die Prognoseeinheit (14) die Aktivierung des Antriebs des "Trimm-Stellantriebs" (10) regelt und dann eine Position der Verankerung des "Trimm-Stellantriebs" (10) in der Hauptsteuerkette (5) regelt, was die Widerstandskraft, die durch den "Trimm-Stellantrieb" (10) der Betätigung des Flugsteuerorgans (4) durch die Bedienungsperson entgegengesetzt wird, verändert,
**dass** die Warneinheit (13) aufhört, den Befehl der Verankerung (25) des "Trimm-Stellantriebs" (10) zu erzeugen, wenn die Kräftemanagementeinheit (15) eine Steuerangabe (21) erzeugt, die einer Anforderung einer Reduzierung des von dem Hauptrotor (3) zu liefernden Auftriebs entspricht, wobei die Bedienungsperson auf das Flugsteuerorgan (4) eine Betätigungskraft ausübt, die sich einer Widerstandskraft des "Trimm-Stellantriebs" entgegensetzt.

2. Verfahren nach Anspruch 1,
**dadurch gekennzeichnet, dass**
das Verfahren ferner ein Vergleichen des Wertes des ersten Leistungsspielraums (MP1) mit einem ersten Leistungsschwellenwert (SP1), der gemäß der aktuellen Regelungsbetriebsart definiert ist, durch die Warneinheit (13) aufweist, und
die Warneinheit (13) aufhört, den Befehl der Verankerung (25) des "Trimm-Stellantriebs" (10) zu erzeugen, wenn folgende Bedingungen erfüllt sind:
-) die Kräftemanagementeinheit (15) erzeugt eine Befehlsangabe (21) bezüglich einer Positionsangabe (17), die ein Fehlen einer Betätigung des Flugsteuerorgans (4) durch die Bedienungsperson feststellt, und
-) die Warneinheit (13) stellt einen Wert eines ersten Leistungsspielraums (MP1) fest, der größer oder gleich dem ersten Leistungsschwellenwert (SP1) ist.

3. Verfahren nach einem der Ansprüche 1 und 2,
**dadurch gekennzeichnet, dass** die Prognoseeinheit (14) die Aktivierung des Antriebs des "Trimm-Stellantriebs" (10) in Abhängigkeit von der Veränderung des Wertes von in gleicher Weise der Positionsangabe (17) und/oder der Kraftangabe (19) regelt.

4. Verfahren nach einem der Ansprüche 1 und 2,
**dadurch gekennzeichnet, dass** die Prognoseeinheit (14) die Aktivierung des Antriebs des "Trimm-Stellantriebs" (10) in Abhängigkeit von der Änderung des ersten Leistungsspielraums (MP1) regelt.

5. Verfahren nach einem der Ansprüche 1 bis 4,
**dadurch gekennzeichnet, dass** nach der Erzeugung des Verankerungsbefehls (25) durch die Warneinheit (13) eine Verankerungsangabe (30) bezüglich der aktuellen Verankerungsposition des "Trimm-Stellantriebs" (10) in der Hauptsteuerkette (5) durch die Warneinheit (13) mindestens an den Autopiloten (9) abgegeben wird.

6. Verfahren nach einem der Ansprüche 1 bis 5,
**dadurch gekennzeichnet, dass**:
das mindestens eine Warnelement (7, 10) eine Vibrationsvorrichtung (7) aufweist, die in dem Flugsteuerorgan (4) eingebaut ist, wobei die Warneinheit (13) außerdem einen zweiten Leistungsspielraum (MP2) sammelt, der von der Prognoseeinheit (14) geliefert wird als Differenz zwischen der vorhergesagten Leistung (PP) und einem zweiten Leistungsschwellenwert (LP2),
die Warneinheit (13) einen Aktivierungsbefehl (31) der Vibrationsvorrichtung (7) unter kumulierten Bedingungen einer Sammlung durch die Warneinheit (13) einerseits des zweiten Leistungsspielraums (MP2) und andererseits in gleicher Weise einer Positionsangabe (17) und/oder einer Kraftangabe (19) bezüglich einer Anforderung einer Erhöhung des von dem Hauptrotor (3) zu liefernden Auftriebs erzeugt, und
die Erzeugung des Aktivierungsbefehls der Vibrationsvorrichtung (7) durch die Warneinheit (13) unterbrochen wird infolge der Erfassung eines Wertes des zweiten Leistungsspielraums (MP2) durch die Warneinheit (13), der größer ist als ein zweiter Leistungsschwellenwert (SP2), der gemäß der aktuellen Regelungsbetriebsart vorbestimmt ist.

7. Verfahren nach einem der Ansprüche 1 bis 6,
**dadurch gekennzeichnet, dass** der Befehl zur Verankerung (25) des "Trimm-Stellantriebs" (10) bedingt ist durch die Berücksichtigung des intrinsischen Widerstands der Hauptsteuerkette (5) gegenüber ihrer Betätigung durch einen Vergleich durch die Warneinheit (13) des ersten Leistungsspielraums (MP1) mit einem dritten vorbestimmten Leistungsschwellenwert (SP3).

8. Verfahren nach einem der Ansprüche 6 bis 7,
**dadurch gekennzeichnet, dass** der Befehl (31) der Aktivierung der Vibrationsvorrichtung (7) durch die Warneinheit (13) ferner bedingt ist durch eine Berücksichtigung des intrinsischen Widerstands der Hauptsteuerkette (5) gegenüber ihrer Betätigung durch einen Vergleich durch die Warneinheit (13) von dem zweiten Leistungsspielraum (MP2) mit einem vierten vorbestimmten Leistungsschwellenwert (SP4).

9. Verfahren nach einem der Ansprüche 1 bis 8,
**dadurch gekennzeichnet, dass** die Steuerangabe (21), die die Unterbrechung der Verankerung des "Trimm-Stellantriebs" (10) bewirkt, abgeleitet ist aus kumulierten Bedingungen, die einerseits eine Kraftangabe (19), die kleiner oder gleich einem vorbestimmten Kraftschwellenwert (SE) ist, und andererseits eine Positionsangabe (17) umfassen, die eine Betätigung des Flugsteuerorgans (4) durch die Bedienungsperson feststellen.

10. Verfahren nach einem der Ansprüche 6 bis 9,
**dadurch gekennzeichnet, dass** die von der Vibrationsvorrichtung (7) erzeugten Vibrationen sich in gleicher Weise in der Frequenz und/oder in der Amplitude gemäß der Veränderung des Wertes des zweiten Leistungsspielraums (MP2) ändern.

11. Verfahren nach einem der Ansprüche 6 bis 10,
**dadurch gekennzeichnet, dass** der Betrieb des Antriebsaggregats (1) gemäß vorbestimmten Regelungsbetriebsarten geregelt wird, von denen AEO(All Engine Operative)-Betriebsarten eine PMT (Puissance Maximum Transitoire) genannte Betriebsart, eine PMD (Puissance maximum au decollage) genannte Betriebsart und eine PMC (Puissance Maximum Continue) genannte Betriebsart aufweisen, sowie OEI(One Engine Inoperative)-Betriebsarten, darunter eine OEI-Betriebsart sehr kurzer Dauer, und eine OEI-Betriebsart kurzer Dauer und eine kontinuierliche OEI-Betriebsart, und dadurch, dass das jeweilige Einsetzen des "Trimm-Stellantriebs" (10) und der Vibriervorrichtung (7) durch die Warnanlage selektiv ausgeführt werden gemäß der aktuellen Regelungsbetriebsart des Antriebsaggregats (1), wobei die Verankerung des "Trimm-Stellantriebs" (10) und die Aktivierung des Vibrationsvorrichtung (7) gemäß den folgenden Modalitäten erfolgen:
-) Betätigen des "Trimm-Stellantriebs" (10) für eine aktuelle Regelungsbetriebsart des Antriebsaggregats (1), wobei sich unter den Regelungsbetriebsarten befinden: die PMD-Betriebsart, die PMC-Betriebsart, die OEI-Betriebsart kurzer Dauer und die kontinuierliche OEI-Betriebsart,
-) Betätigen der Vibrationsvorrichtung (7) für eine aktuelle Regelungsbetriebsart des Antriebsaggregats (1) aus Regelungsbetriebsarten, die die PMT-Betriebsart und die OEI-Betriebsart sehr kurzer Dauer umfassen.

12. Verfahren nach einem der Ansprüche 6 bis 11,
**dadurch gekennzeichnet, dass** die jeweiligen Werte mindestens des ersten Leistungsgrenzwertes (LP1) und des zweiten Leistungsgrenzwertes (LP2) sich gemäß der Vortriebsgeschwindigkeit des Drehflügelflugzeugs ändern, wobei die Werte des ersten Leistungsgrenzwertes (LP1) und des zweiten Grenzwertes (LP2) ausgehend von einer Vortriebsgeschwindigkeit des Drehflügelflugzeugs mit niedriger Geschwindigkeit bis zu einer hohen Vortriebsgeschwindigkeit des Drehflügelflugzeugs in der Reiseflugphase abnehmen.

13. Verfahren nach den Ansprüchen 11 und 12,
**dadurch gekennzeichnet, dass** der Wert des ersten Leistungsschwellenwertes (LP1) sich gemäß folgenden Modalitäten ändert:
-) bei niedrigen Vortriebsgeschwindigkeiten des Drehflügelflugzeugs, in der PMD-Regelungsbetriebsart und in der OEI-Regelungsbetriebsart kurzer Dauer ist der Wert des ersten Leistungsgrenzwertes (LP1) konstant,
-) bei Übergangsvortriebsgeschwindigkeiten des Drehflügelflugzeugs zwischen niedrigen Vortriebsgeschwindigkeiten und hohen Vortriebsgeschwindigkeiten des Drehflügelflugzeugs ist der Wert des ersten Leistungsgrenzwertes (LP1) abnehmend infolge eines Übergangs der AEO-Regelungsbetriebsart des Antriebsaggregats (1) von dem PMD-Betrieb in den PMC-Betrieb und infolge eines Übergangs der OEI-Regelungsbetriebsart des Antriebsaggregats (1) von dem OEI-Betrieb kurzer Dauer in den kontinuierlichen OEI-Betrieb,
-) bei hohen Vortriebsgeschwindigkeiten des Drehflügelflugzeugs in der PMC-Regelungsbetriebsart und in der OEI(One Engine Inoperative)-Regelungsbetriebsart langer Dauer ist der Wert des ersten Leistungsgrenzwertes (LP1) konstant.

14. Verfahren nach Anspruch 11 und 12,
**dadurch gekennzeichnet, dass** der Wert des zweiten Leistungsgrenzwertes (LP2) sich gemäß den folgenden Modalitäten ändert:
-) bei niedrigen Vortriebsgeschwindigkeiten des Drehflügelflugzeugs in der PMT-Regelungsbetriebsart und in der OEI-Regelungsbetriebsart sehr kurzer Dauer ist der Wert des zweiten Leistungsgrenzwertes (LP2) konstant,
-) bei Übergangs-Vortriebsgeschwindigkeiten des Drehflügelflugzeugs zwischen den niedrigen Vortriebsgeschwindigkeiten und den hohen Vortriebsgeschwindigkeiten des Drehflügelflugzeugs ist der Wert des zweiten Leistungsgrenzwertes (LP2) in der PMT-Regelungsbetriebsart abnehmend und in der OEI-Regelungsbetriebsart sehr kurzer Dauer konstant,
-) bei hohen Vortriebsgeschwindigkeiten des Drehflügelflugzeugs ist der Wert des zweiten Grenzwertes (LP2) in der PMT-Regelungsbetriebsart und in der OEI-Regelungsbetriebsart sehr kurzer Dauer konstant.

15. Verfahren nach einem der Ansprüche 1 bis 14,
**dadurch gekennzeichnet, dass** die Berechnung des mindestens einen Leistungsspielraums (MP1, MP2) insbesondere durch die Prognoseeinheit (14) gemäß den folgenden Modalitäten ausgeführt wird:
-) Berechnen der vorhergesagten Leistung (PP) durch Aufsummierung der aktuellen Leistung (PC), die von dem Antriebsaggregat (1) entsprechend der Anwendung des aktuellen Regelungsbetriebs geliefert wird, und einer Anforderung einer von dem Antriebsaggregat (1) zu liefernden Leistung, die von der Prognoseeinheit (14) ausgehend von der Befehlsangabe (21) berechnet wird,
-) Berechnen des mindestens einen Leistungsspielraums (MP1, MP2) durch Subtraktion der vorhergesagten Leistung (PP) von dem Leistungsgrenzwert (LP1, LP2).

16. Verfahren nach einem der Ansprüche 1 bis 15,
**dadurch gekennzeichnet, dass** die Regelung der Aktivierung des Antriebs (12) des "Trimm-Stellantriebs" (10) von der Prognoseeinheit (14) ausgeführt wird durch aufeinanderfolgendes Berechnen bei einer vorgegebenen Frequenz eines Positionsbefehls der Verankerung (26) des "Trimm-Stellantriebs" (10) gemäß den folgenden Modalitäten:
-) Berechnen eines Positionsspielraums (MPo) bezüglich der Veränderung der Position des Flugsteuerorgans (4), der gegenüber dem ersten Leistungsspielraum (MP1) zugelassen ist, wobei der Positionsspielraum (MPo) berechnet wird durch Division des ersten Leistungsspielraums (MP1) durch eine vordefiniert Konstante (K1), die eine vorgegebene Leistungsänderung für eine Positionsänderung des Flugsteuerorgans (4) identifiziert, sodann
-) Ableiten des Positionsbefehls der Verankerung (26) des "Trimm-Stellantriebs" (10) durch Aufsummierung des vorher berechneten Positionsspielraums (MPo) mit der aktuellen Position des Flugsteuerorgans, die durch die Positionsangabe (17), die von dem Positionsdetektor (18) geliefert wird, identifiziert wird,
-) Erzeugen eines Aktivierungsbefehls (27) für den Antrieb des "Trimm-Stellantriebs" (10) gemäß dem Verankerungspositionsbefehl (26) des "Trimm-Stellantriebs" (10), der vorher abgeleitet wurde.

17. Verfahren nach Anspruch 16,
**dadurch gekennzeichnet, dass** der Aktivierungsbefehl (27) des Antriebs (12) des "Trimm-Stellantriebs" (10), der von der Prognoseeinheit (14) erzeugt wurde, eine Verankerungsposition (25) des "Trimm-Stellantriebs" (10) und eine Betätigungsgeschwindigkeit des "Trimm-Stellantriebs" (10) durch den Antrieb (12), mit dem er ausgestattet ist, identifiziert, wobei die Betätigungsgeschwindigkeit gemäß der Veränderung der Position der Verankerung (26) des "Trimm-Stellantriebs" (10) und gemäß dem aktuellen Regelungsmodus des Antriebsaggregats (1) berechnet wird.

18. Verfahren nach einem der Ansprüche 1 bis 16,
**dadurch gekennzeichnet, dass** der bei dem Verfahren verwendete "Trimm-Stellantrieb" (10) ein motorisierter "Trimm-Stellantrieb" mit Verankerung vom aktiven Typ ist.

19. Verfahren nach Anspruch 18,
**dadurch gekennzeichnet, dass** infolge der Unterbrechung der Erzeugung des Verankerungsbefehls (25) durch die Warneinheit (13) der "Trimm-Stellantrieb" (10) gemäß einem Reibungskonfigurationsmodus (33) plaziert wird, indem der "Trimm-Stellantrieb" (10) an der Hauptsteuerkette (5) verankert gehalten wird, indem er eine Widerstandskraft (Efr) erzeugt, wobei die Widerstandskraft einen konstanten Wert hat, der größer oder gleich dem Absolutwert des Kraftschwellenwertes (SE) ist.

20. Verfahren nach einem der Ansprüche 1 bis 19,
**dadurch gekennzeichnet, dass** das Flugsteuerorgan (4), das mit dem mindestens einen Warnorgan (10, 7) ausgerüstet ist, welches nach dem Verfahren angewendet wird, ein Flugsteuerorgan (4) ist, das eine beliebige Veränderung des Anstellwinkels von Rotorblättern (2) des Hauptrotors (3) bewirkt.

## Claims

1. Method of implementing a tactile signal warning device fitted to a human-driven flight control member (4) of a rotorcraft, said flight control member (4) forming part of a main control chain (5) for causing a variation in the pitch of the blades (2) of at least one main rotor (3) of the rotorcraft having a drive axis substantially vertical providing essentially the lift of the rotorcraft,
said rotorcraft being fitted:
• with a power plant (1) providing mechanical power used at least for driving in rotation the main rotor (3), with at least one auxiliary control chain (8) comprising an autopilot (9) for generating flight control orders controlling the use of at least one anchorable motorized trim actuator (10) arranged in parallel with said main control chain (5),
• with a predictive unit (14) which calculates iteratively at a given frequency at least one power margin (MP1,MP2) relating to the power available from the power plant (1) by taking the difference between a predicted power (PP) and a power limit (LP1,LP2) relating to a power to be supplied by the power plant (1) predefined according to a current regulation rating of the power plant (1),
**characterized:**
**in that** the warning device comprises a first calculation member, referred to as a warning unit (13), a second calculation member, formed by said predictive unit (14), a third calculation member, referred to as a force management unit (15), and at least one warning member (10,7) for generating a tactile sensation perceptible by the human pilot by means of the flight control member (4), said at least one warning member (10,7) comprising at least said trim actuator (10) opposing a resisting force against the flight control member (4) being driven by a human, such that:
-) the force management unit (15) generates command data (21) relating to a human-originating request for lift to be supplied by the main rotor (3), said command data (21) being a function of at least one item of data selected from the group comprising:
• position data (17) supplied to the force management unit (15) by a position sensor (18) measuring a current position of the flight control member (4) and
• force data (19) supplied to the force management unit (15) by a force measurement device (20) engaged with said main control chain (5), said force data (19) being representative of the forces for moving the main control chain (5) by a human driving the flight control member (4),
-) the predictive unit (14) calculates said predicted power (PP) by summing a current power (PC) of the power plant (1) and a variation in the power to be supplied by the power plant (1) required by a human driving the flight control member (4) and deduced by the predictive unit (14) according to command data (21) which is a function at least of said position data (17),
-) the warning unit (13) collects at least one of the items of data selected from the group comprising:
*) the command data (21) as a function of at least one of the position data (17) supplied by the position sensor (18) and the force data supplied by the force measurement device (20),
*) at least a first said power margin (MP1) supplied by the predictive unit (14) by taking the difference between said predicted power (PP) and a first said power limit (LP1),
*) state data (28) relating to activation of at least any one higher operating mode of the autopilot (9) causing implementation of said main control chain providing guidance of the rotorcraft along at least one travel axis including at least the gravity axis,
**in that** the warning unit (13) generates an anchoring command (25) for anchoring the trim actuator (10) on the main control chain (5), said anchoring command (25) being generated on condition both of said first power margin (MP1) and of said command data (21) which may be a function equally well of position data (17) and/or of force data (19) relating to a request to increase the lift to be supplied by the main rotor (3),
**in that**, as a result of the warning unit (13) generating said anchoring command (25) for anchoring the trim actuator (10), the predictive unit (14) regulates the activation of the motorization of the trim actuator (10) and consequently an anchoring position of the trim actuator (10) on the main control chain (5) so as to vary the resisting force opposed by the trim actuator (10) against the human-driving of the flight control member (4),
**in that** the warning unit (13) ceases to generate the anchoring command (25) for anchoring the trim actuator (10) when the force management unit (15) generates command data (21) representative of a human request to reduce the lift to be supplied by the main rotor (3), the human exerting a drive force on the flight control member (4) which opposes a resisting force of the trim actuator.

2. Method according to claim 1,
**characterized:**
**in that** the method further comprises a comparison operation by the warning unit (13) between the value of the first power margin (MP1) and a first power threshold (SP1) defined in compliance with the current regulation rating, and
**in that** the warning unit (13) ceases to generate the anchoring command (25) for anchoring the trim actuator (10) when the following conditions are satisfied:
-) the force management unit (15) generates command data (21) relating to position data (17) identifying that the flight control member (4) is not being driven by a human, and
-) the warning unit (13) identifies a value of the first power margin (MP1) which is greater than or equal to said first power threshold (SP1).

3. Method according to any one of claims 1 and 2,
**characterized in that** the predictive unit (14) regulates said activation of the motorization of the trim actuator (10) as a function of the variation in the value equally well of the position data (17) and/or of the force data (19).

4. Method according to any one of claims 1 and 2,
**characterized in that** the predictive unit (14) regulates the activation of the motorization of the trim actuator (10) as a function of the variation in the first power margin (MP1).

5. Method according to any one of claims 1 to 4,
**characterized in that** as a result of the warning unit (13) generating the anchoring command (25), anchoring data (30) relating to the current anchoring position of the trim actuator (10) on the main control chain (5) is supplied by the warning unit (13) at least to the autopilot (9).

6. Method according to any one of claims 1 to 5,
**characterized:**
**in that** said at least one warning member (7,10) comprising a vibrator (7) installed on the flight control member (4), the warning unit (13) also collects a second said power margin (MP2) supplied by the predictive unit (14) by taking the difference between said predicted power (PP) and a second said power limit (LP2),
**in that** the warning unit (13) generates an activating command (31) for activating the vibrator (7) under the combined conditions of the warning unit (13) collecting, on the one hand, said second power margin (MP2) and, on the other hand, equally well position data (17) and/or force data (19) relating to a request to increase the lift to be supplied by the main rotor (3), and
**in that** generation by the warning unit (13) of the activating command for activating the vibrator (7) is interrupted as a result of the warning unit (13) identifying a value of the second power margin (MP2) which is greater than a second power threshold (SP2) predefined in compliance with the current regulation rating.

7. Method according to any one of claims 1 to 6,
**characterized in that** the anchoring command (25) for anchoring the trim actuator (10) is conditional on taking account of the intrinsic resistance of the main control chain (5) against being moved, by the warning unit (13) comparing the first power margin (MP1) and a third predefined power threshold (SP3).

8. Method according to any one of claims 6 to 7,
**characterized in that** the activating command (31) for activating the vibrator (7) by the warning unit (13) is also conditional on taking account of the intrinsic resistance of the main control chain (5) against being moved, by the warning unit (13) comparing the second power margin (MP2) and a fourth predefined power threshold (SP4).

9. Method according to any one of claims 1 to 8,
**characterized in that** said command data (21) causing the anchoring of the trim actuator (10) to be interrupted is deduced from combined conditions comprising, on the one hand, force data (19) less than or equal to a predefined force threshold (SE) and, on the other hand, position data (17) identifying that the flight control member (4) is being driven by a human.

10. Method according to any one of claims 6 to 9,
**characterized in that** the vibrations generated by the vibrator (7) vary equally well in frequency and/or in amplitude depending on the variation in the value of the second power margin (MP2).

11. Method according any one of claims 6 to 10,
**characterized in that** the operation of the power plant (1) is regulated in accordance with predefined regulation ratings including AEO (All Engine Operative) ratings comprising an MTP (Maximum Transitional Power) rating, a TOP (Maximum Takeoff Power) rating and an MCP (Maximum Continuous Power) rating, and also OEI (One Engine Operative) ratings including a very short duration OEI rating, a short duration OEI rating and a continuous OEI rating,
and **in that** the respective implementations of the trim actuator (10) and of the vibrator (7) by the warning device are selectively operated according to the current regulation rating of the power plant (1), the anchoring of the trim actuator (10) and the activation of the vibrator (7) being operated in accordance with the following modalities:
-) the trim actuator (10) is implemented for a current regulation rating of the power plant (1) coming within the regulation ratings comprising the TOP rating, the MCP rating, the short duration OEI rating and the continuous OEI rating,
-) the vibrator (7) is implemented for a current regulation rating of the power plant (1) coming within the regulation ratings comprising the MTP rating and the very short duration OEI rating.

12. Method according to any one of claims 6 to 11,
**characterized in that** the respective values of at least one of the first power limit (LP1) and of the second power limit (LP2) vary depending on the forward speed of the rotorcraft, the values of the first power limit (LP1) and of the second power limit (LP2) decreasing from the rotorcraft advancing at low speeds to the rotorcraft advancing at high speeds in cruising flight.

13. Method according to claims 11 and 12,
**characterized in that** the value of the first power limit (LP1) varies according to the following modalities:
-) at low forward speeds of the rotorcraft, in the TOP regulation rating and the short duration OEI regulation rating, the value of the first power limit (LP1) is constant,
-) at transitional forward speeds of the rotorcraft between low and high forward speeds of the rotorcraft, the value of the first power limit (LP1) decreases as a result of the AEO regulation rating of the power plant (1) passing from the TOP rating to the MCP rating and as a result of the OEI regulation rating of the power plant (1) passing from the short duration OEI rating to the continuous OEI rating,
-) at high forward speeds of the rotorcraft, in the MCP regulation rating and in the long duration OEI (One Engine Operative) regulation rating, the value of the first power limit (LP1) is constant.

14. Method according to claims 11 and 12,
**characterized in that** the value of the second power limit (LP2) varies according to the following modalities:
-) at low forward speeds of the rotorcraft, in the MTP regulation rating and in the very short duration OEI regulation rating, the value of the second power limit (LP2) is constant,
-) at transitional forward speeds of the rotorcraft between low and high forward speeds of the rotorcraft, the value of the second power limit (LP2) decreases in the MTP regulation rating and is constant in the very short duration OEI regulation rating,
-) at high forward speeds of the rotorcraft, the value of the second power limit (LP2) is constant in the MTP regulation rating and in the very short duration OEI regulation rating.

15. Method according to any one of claims 1 to 14,
**characterized in that** said at least one power margin (MP1,MP2) is calculated more particularly by the predictive unit (14) according to the following modalities:
-) calculating the predicted power (PP) by summing the current power (PC) supplied by the power plant (1) in compliance with application of the current regulation rating and a request for power to be supplied by the power plant (1) calculated by the predictive unit (14) on the basis of the command data (21),
-) calculating said at least one power margin (MP1, MP2) by subtracting the predicted power (PP) from the power limit (LP1,LP2).

16. Method according to any one of claims 1 to 15,
**characterized in that** activation of the motorization (12) of the trim actuator (10) is regulated by the predictive unit (14) calculating iteratively at a given frequency an anchoring position command (26) for the trim actuator (10) according to the following modalities:
-) calculating a position margin (MPo) relating to variation in the position of the flight control member (4) which is acceptable relative to the first power margin (MP1), said position margin (MPo) being calculated by dividing the first power margin (MP1) by a predefined constant (K1) identifying a power variation for a given variation in the position of the flight control member (4), then
-) deducing said anchoring position command (26) for the trim actuator (10) by summing the previously calculated position margin (MPo) and the current position of the flight control member identified by the position data (17) supplied by the position sensor (18),
-) generating an activation order (27) to activate the motorization of the trim actuator (10) according to the previously deduced anchoring position command (26) for the trim actuator (10).

17. Method according to claim 16,
**characterized in that** the activation order (27) to activate the motorization (12) of the trim actuator (10) generated by the predictive unit (14) identifies an anchoring position (25) for the trim actuator (10) and a speed at which the trim actuator (10) is to be driven by the motorization (12) with which it is equipped, calculated according to the variation in the anchoring position (26) for the trim actuator (10) and according to the current regulation mode of the power plant (1).

18. Method according to any one of claims 1 to 16,
**characterized in that** the trim actuator (10) implemented by the method is an anchorable motorized trim actuator of active type.

19. Method according to claim 18,
**characterized in that** following interruption of the anchoring command (25) being generated by the warning unit (13), the trim actuator (10) is placed in a friction configuration mode (33) in which the trim actuator (10) is held anchored to the main control chain (5) by generating a resisting force (Efr), referred to as a friction force, of constant value which is greater than or equal to the absolute value of said force threshold (SE).

20. Method according to any one of claims 1 to 19,
**characterized in that** the flight control member (4) fitted with said at least one warning member (10,7) implemented in accordance with the method is a flight control member (4) for causing any variation in the pitch of the blades (2) of the main rotor (3).
